# EUROPEAN PATENT APPLICATION

(11) **EP 4 787 882 A1**
(43) Date of publication of application: **05.08.2026**
(21) Application number: 24870794.5
(22) Date of filing: 25.09.2024
(51) Int. Cl.: H04N 23/67

(54) **FOCUSING METHOD AND APPARATUS, AND ELECTRONIC DEVICE AND STORAGE MEDIUM**

(30) Priority: 25.09.2023 CN 202311243823
(71) Applicant: Hangzhou Hikrobot Co., Ltd., Hangzhou, Zhejiang 310051 (CN)
(72) Inventor: LU, Yi, Hangzhou, Zhejiang 310051 (CN)
(74) Representative: Schmitz, Joseph
(86) International application number: PCT/CN2024/121138
(87) International publication number: WO 2025/067250

(57) **Abstract**

Provided in the embodiments of the present application are a focusing method and apparatus, and an electronic device and a storage medium. By means of applying the embodiments of the present application, on the basis of a change trend of image quality scores before and after each focusing position adjustment, which image quality scores are collected by an image collection device and are about an image of a target object, a target focusing position of the image collection device can be determined, thus implementing automatic focusing of the image collection device without using a distance sensor and without increasing the cost of the image collection device. Moreover, since each image quality score is determined on the basis of a definition score and an algorithm processing score of the image, and the algorithm processing score is used for representing the recognition success rate of the target object in the image, applying the embodiments of the present application to focus the image collection device also allows the image collected by the focused image collection device to have both a relatively high sharpness and a relatively high recognition success rate for the target object.

## Description

The present application claims the priority to Chinese Patent Application No. 202311243823.2, filed with the China National Intellectual Property Administration on September 25, 2023 and entitled "FOCUSING METHOD AND APPARATUS, AND ELECTRONIC DEVICE AND STORAGE MEDIUM", which is incorporated herein by reference in its entirety.

### Technical Field

The present application relates to the field of image acquisition technology, and in particular, to a focusing method, a focusing apparatus, an electronic device, and a storage medium.

### Background

When using an image acquisition device to recognize a target object such as a two-dimensional code, a bar code and etc., the image acquisition device first acquires an image of the target object. However, the distance between the target object and the image acquisition device may change. In such case, an automatic focusing method can be typically employed to enable the image acquisition device to quickly focus on the target object.

In related technologies, a distance sensor installed on the image acquisition device is usually utilized to achieve automatic focusing of the image acquisition device. That is, the distance between the target object and the image acquisition device is sensed with the aid of the distance sensor, and the focusing of the image acquisition device on the target object is realized based on the sensed distance. However, installing the distance sensor on the image acquisition device also leads to an increase in the production cost of the image acquisition device.

### Summary

The purpose of the embodiments of the present application is to provide a focusing method, a focusing apparatus, an electronic device, and a storage medium, so as to achieve automatic focusing of the image acquisition device without increasing the cost of the image acquisition device. The specific technical solutions are as follows:
A first aspect of the embodiments of the present application provides a focusing method. The method includes:
performing a focal length adjustment of an image acquisition device according to a preset step length from an initial focal length position of the image acquisition device, until an optimal focal length position is determined;
in response to performing the focal length position adjustment of the image acquisition device, determining a change trend of image quality scores of images of a target object acquired by the image acquisition device before and after the adjustment; wherein, an image quality score is determined based on an image focusing score and/or an algorithm processing score; the algorithm processing score is configured to characterize a processing effect obtained by performing algorithm processing on the respective image;
in response to determining that the change trend is rising, maintaining a focusing direction unchanged;
in response to determining that the change trend is falling and a current change of the image quality scores is a first change, adjusting a focusing direction for a next focal length adjustment;
in response to determining that the change trend is falling and a change trend before and after a previous adjustment is rising, or, in response to determining that the change trend is falling and the current change of the image quality scores is not the first change, determining a focal length position before the current adjustment as the optimal focal length position.

Optionally, in a specific implementation, a focal length range of the image acquisition device is pre-divided into at least two intervals;
performing the focal length adjustment of the image acquisition device according to the preset step length from the initial focal length position of the image acquisition device, until the optimal focal length position is determined, includes:
selecting an initial focal length position for each of the intervals, and performing the focal length adjustment of the image acquisition device within each of the intervals according to the preset step length from the initial focal length position selected for each of the intervals, until a local optimal focal length position within each of the intervals is determined;
determining one of at least two determined local optimal focal length positions corresponding to a highest image quality score of the image quality scores of the images acquired, as the optimal focal length position.

Optionally, in a specific implementation, performing the focal length adjustment of the image acquisition device according to the preset step length from the initial focal length position of the image acquisition device, until the optimal focal length position is determined, includes:
performing the focal length adjustment of the image acquisition device within a specified interval in a focal length range of the image acquisition device according to the preset step length from the initial focal length position of the image acquisition device, until the optimal focal length position is determined.

Optionally, in a specific implementation, performing the focal length adjustment of the image acquisition device according to the preset step length from the initial focal length position of the image acquisition device, includes:
obtaining the initial focal length position of the image acquisition device and a focusing direction for a first focal length adjustment;
performing the focal length adjustment of the image acquisition device according to the focusing direction for the first focal length adjustment and the preset step length from the initial focal length position.

Optionally, in a specific implementation, obtaining the initial focal length position of the image acquisition device and the focusing direction for the first focal length adjustment, includes:
obtaining a preset initial focal length position of the image acquisition device and a preset focusing direction for the first focal length adjustment;
   or,
obtaining a historical optimal focal length position of the image acquisition device as the initial focal length position; comparing the initial focal length position with a middle position of a focal length range of the image acquisition device; in response to determining that the initial focal length position is less than the middle position, determining a focusing direction that increases an adjusted focal length position as the focusing direction for the first focal length adjustment; in response to determining that the initial focal length position is greater than the middle position, determining a focusing direction that decreases the adjusted focal length position as the focusing direction for the first focal length adjustment.

Optionally, in a specific implementation, the method further includes:
in response to a focal length position of the image acquisition device being the initial focusing position, and in response to completion of each focal length adjustment, controlling the image acquisition device to acquire an image of the target object, and determining an image focusing score and an algorithm processing score of the image, respectively;
calculating a first product of the image focusing score and a preset image focusing weight, and a second product of the algorithm processing score and a preset algorithm processing weight, and calculating a sum of the first product and the second product as an image quality score of the image.

Optionally, in a specific implementation, before calculating the first product of the image focusing score and the preset image focusing weight, and the second product of the algorithm processing score and the preset algorithm processing weight, the method further includes:
selecting, from preset mapping relationships between multiple weight combinations and application scenarios, a target weight combination matching a current application scenario of the image acquisition device; wherein each weight combination includes: one image focusing weight and one algorithm processing weight;
calculating the first product of the image focusing score and the preset image focusing weight, and the second product of the algorithm processing score and the preset algorithm processing weight, includes:
   calculating a first product of the image focusing score and the image focusing weight included in the target weight combination, and a second product of the algorithm processing score and the algorithm processing weight included in the target weight combination.

Optionally, in a specific implementation, the mapping relationships include:
a mapping relationship between an application scenario for performing object processing on the target object and a first weight combination; wherein the image focusing weight included in the first weight combination is less than the algorithm processing weight; and,
a mapping relationship between an image acquisition scenario where the target object does not exist and a second weight combination; wherein the algorithm processing weight included in the second weight combination is 0.

Optionally, in a specific implementation, determining the image focusing score and the algorithm processing score of the image, includes:
determining a region of interest in the image for algorithm processing regarding the target object, and determining an image focusing score and an algorithm processing score of the region of interest.

Optionally, in a specific implementation, determining the region of interest in the image for algorithm processing regarding the target object, includes:
performing object recognition on the image, and determining an image region where a recognized detection bounding box including the target object is located as the region of interest for algorithm processing regarding the target object.

Optionally, in a specific implementation, in response to performing the focal length position adjustment of the image acquisition device, determining the change trend of the image quality scores of the images of the target object acquired by the image acquisition device before and after the adjustment, includes:
in response to performing the focal length position adjustment of the image acquisition device, calculating a numerical relationship and a difference between the image quality scores of the images of the target object acquired by the image acquisition device before and after the current adjustment;
in response to determining that the difference is greater than a preset value, and the numerical relationship indicates that the image quality score before the current adjustment is less than the image quality score after the current adjustment, determining that the change trend of the image quality scores before and after the current adjustment is rising;
in response to determining that the difference is greater than the preset value, and the numerical relationship indicates that the image quality score before the current adjustment is greater than the image quality score after the current adjustment, determining that the change trend of the image quality scores before and after the current adjustment is falling;
in response to determining that the difference is not greater than the preset value, determining that the change trend of the image quality scores before and after the current adjustment is unchanged;
the method further includes: in response to determining that the change trend is unchanged, maintaining the focusing direction unchanged.

Optionally, in a specific implementation, the method further includes:
determining an adjustment ratio based on the image acquisition device, and calculating the preset value based on a preset reference value and the adjustment ratio.

Optionally, in a specific implementation, in the case where the change trend is falling and the current change of the image quality scores is the first change, adjusting the focusing direction for the next focal length adjustment, includes:
in response to determining that the change trend is falling, a specified number of consecutive times that the change trend is falling is reached, and a situation where the change trends have been the same for the specified number of consecutive times does not occur before the current adjustment, adjusting the focusing direction for the next focal length adjustment;
in the case where the change trend is falling and the change trend before and after the previous adjustment is rising, determining the focal length position before the current adjustment as the optimal focal length position, includes:
   in response to determining that the change trend is falling, the specified number of consecutive times that the change trend is falling is reached, and a situation where the change trends have been the same for the specified number of consecutive times are the same occurs before the current adjustment, determining a focal length position before a first adjustment of adjustments at the specified number of consecutive times including the current adjustment, as the optimal focal length position*.*

Optionally, in a specific implementation, the method further includes:
judging whether the optimal focal length position satisfies a preset focusing condition;
in response to determining that the optimal focal length position satisfies the preset focusing condition, focusing the image acquisition device according to the optimal focusing position;
in response to determining that the optimal focal length position does not satisfy the preset focusing condition, traversing each focal length position within a focal length range of the image acquisition device, and in response to traversing each focal length position, determining the image quality scores of the images acquired by the image acquisition device;
updating the optimal focal length position to a focal length position of the image acquisition device in response to determining that an image with a highest image quality score is acquired.

Optionally, in a specific implementation, the target object is a graphic recognition code, the algorithm processing score includes: a code reading score, and the processing effect includes but is not limited to at least one of recognition success rate, recognition accuracy rate, and recognition speed.

A second aspect of the embodiments of the present invention provides a focusing apparatus. The apparatus includes:
a focusing module, configured to perform a focal length adjustment of an image acquisition device according to a preset step length from an initial focal length position of the image acquisition device, until an optimal focal length position is determined; wherein, the focusing module includes:
a change trend determination sub-module, configured to, in response to performing the focal length position adjustment of the image acquisition device, determine a change trend of image quality scores of images of a target object acquired by the image acquisition device before and after the adjustment; wherein an image quality score is determined based on an image focusing score and/or an algorithm processing score; the algorithm processing score is configured to characterize a processing effect obtained by performing algorithm processing on the respective image;
a focusing direction maintaining sub-module, configured to, in response to determining that the change trend is rising, maintain a focusing direction unchanged;
a focusing direction adjustment sub-module, configured to, in response to determining that the change trend is falling and a current change of the image quality scores is a first change, adjust a focusing direction for a next focal length adjustment;
an optimal focusing position determination sub-module, configured to, in response to determining that the change trend is falling and a change trend before and after a previous adjustment is rising, or, in response to determining that the change trend is falling and the current change of the image quality scores is not the first change, determine a focal length position before the current adjustment as the optimal focal length position.

Optionally, in a specific implementation, a focal length range of the image acquisition device is pre-divided into at least two intervals; the focusing module is specifically configured to:
select an initial focal length position for each of the intervals, and perform the focal length adjustment of the image acquisition device within each of the intervals according to the preset step length from the initial focal length position selected for each of the intervals, until a local optimal focal length position within each of the intervals is determined;
determine one of at least two determined local optimal focal length positions corresponding to a highest image quality score of the image quality scores of the images acquired, as the optimal focal length position.

Optionally, in a specific implementation, the focusing module is specifically configured to:
perform the focal length adjustment of the image acquisition device within a specified interval in a focal length range of the image acquisition device according to the preset step length from the initial focal length position of the image acquisition device, until the optimal focal length position is determined.

Optionally, in a specific implementation, the focusing module further includes:
an information obtaining sub-module, configured to obtain the initial focal length position of the image acquisition device and a focusing direction for a first focal length adjustment;
the focusing module is specifically configured to perform the focal length adjustment of the image acquisition device according to the focusing direction for the first focal length adjustment and the preset step length from the initial focal length position.

Optionally, in a specific implementation, the information obtaining sub-module is specifically configured to:
obtain a preset initial focal length position of the image acquisition device and a preset focusing direction for the first focal length adjustment; or,
obtain a historical optimal focal length position of the image acquisition device as the initial focal length position; compare the initial focal length position with a middle position of a focal length range of the image acquisition device; in response to determining that the initial focal length position is less than the middle position, determine a focusing direction that increases an adjusted focal length position as the focusing direction for the first focal length adjustment; in response to determining that the initial focal length position is greater than the middle position, determine a focusing direction that decreases the adjusted focal length position as the focusing direction for the first focal length adjustment.

Optionally, in a specific implementation, the apparatus further includes:
a score determination module, configured to, in response to a focal length position of the image acquisition device being the initial focusing position, and in response to completion of each focal length adjustment, control the image acquisition device to acquire an image of the target object, and determine an image focusing score and an algorithm processing score of the image, respectively;
a score calculation module, configured to calculate a first product of the image focusing score and a preset image focusing weight, and a second product of the algorithm processing score and a preset algorithm processing weight, and calculate a sum of the first product and the second product as the image quality score of the image.

Optionally, in a specific implementation, the apparatus further includes:
a weight selection module, configured to, before calculating the first product of the image focusing score and the preset image focusing weight, and the second product of the algorithm processing score and the preset algorithm processing weight, select, from preset mapping relationships between multiple weight combinations and application scenarios, a target weight combination matching a current application scenario of the image acquisition device; wherein each weight combination includes: one image focusing weight and one algorithm processing weight;
the score calculation module is specifically configured to calculate a first product of the image focusing score and the image focusing weight included in the target weight combination, and a second product of the algorithm processing score and the algorithm processing weight included in the target weight combination.

Optionally, in a specific implementation, the mapping relationships include:
a mapping relationship between an application scenario for performing object processing on the target object and a first weight combination; wherein the image focusing weight included in the first weight combination is less than the algorithm processing weight; and,
a mapping relationship between an image acquisition scenario where the target object does not exist and a second weight combination; wherein the algorithm processing weight included in the second weight combination is 0.

Optionally, in a specific implementation, the score determination module includes:
a region determination sub-module, configured to determine a region of interest in the image for algorithm processing regarding the target object;
a score determination sub-module, configured to determine an image focusing score and an algorithm processing score of the region of interest.

Optionally, in a specific implementation, the region determination sub-module is specifically configured to:
perform object recognition on the image, and determine an image region where a recognized detection bounding box including the target object is located as the region of interest for algorithm processing regarding the target object.

Optionally, in a specific implementation, the change trend determination sub-module is specifically configured to:
in response to performing the focal length position adjustment of the image acquisition device, calculate a numerical relationship and a difference between the image quality scores of the images of the target object acquired by the image acquisition device before and after the current adjustment;
in response to determining that the difference is greater than a preset value, and the numerical relationship indicates that the image quality score before the current adjustment is less than the image quality score after the current adjustment, determine that the change trend of the image quality scores before and after the current adjustment is rising;
in response to determining that the difference is greater than the preset value, and the numerical relationship indicates that the image quality score before the current adjustment is greater than the image quality score after the current adjustment, determine that the change trend of the image quality scores before and after the current adjustment is falling;
in response to determining that the difference is not greater than the preset value, determine that the change trend of the image quality scores before and after the current adjustment is unchanged;
the focusing direction maintaining sub-module is further configured to, in response to determining that the change trend is unchanged, maintain the focusing direction unchanged.

Optionally, in a specific implementation, the apparatus further includes:
a numerical adjustment module, configured to determine an adjustment ratio based on the image acquisition device, and calculate the preset value based on a preset reference value and the adjustment ratio.

Optionally, in a specific implementation,
the focusing direction adjustment sub-module is specifically configured to, in response to determining that the change trend is falling, a specified number of consecutive times that the change trend is falling is reached, and a situation where the change trends have been the same for the specified number of consecutive times are the same does not occur before the current adjustment, adjust the focusing direction for the next focal length adjustment;
the optimal focusing position determination sub-module is specifically configured to, in response to determining that the change trend is falling, the specified number of consecutive times that the change trend is falling is reached, and a situation where the change trends have been the same for the specified number of consecutive times occurs before the current adjustment, determine a focal length position before a first adjustment of adjustments at the specified number of consecutive times including the current adjustment, as the optimal focal length position.

Optionally, in a specific implementation, the apparatus further includes:
a focusing judgment module, configured to judge whether the optimal focal length position satisfies a preset focusing condition; in response to determining that the optimal focal length position satisfies the preset focusing condition, trigger a device focusing module, in response to determining that the optimal focal length position does not satisfy the preset focusing condition, trigger a position traversal module;
the device focusing module is configured to focus the image acquisition device according to the optimal focusing position;
the position traversal module is configured to traverse each focal length position within a focal length range of the image acquisition device, and in response to traversing each focal length position, determine the image quality scores of the images acquired by the image acquisition device;
a position update module, configured to update the optimal focal length position to a focal length position of the image acquisition device in response to determining that an image with a highest image quality score is acquired.

Optionally, in a specific implementation, the target object is a graphic recognition code, the algorithm processing score includes: a code reading score, and the processing effect includes but is not limited to at least one of recognition success rate, recognition accuracy rate, and recognition speed.

A third aspect of the embodiments of the present application provides an electronic device, including:
a memory, configured to store a computer program;
a processor, configured to execute the computer program stored on the memory to implement any one of the focusing methods described above.

A fourth aspect of the embodiments of the present application provides a computer-readable storage medium, wherein the computer-readable storage medium stores a computer program, and the computer program, when executed by a processor, implements any one of the focusing methods described above.

The embodiments of the present application also provide a computer program product containing an instruction, wherein the computer program product, when running on a computer, causes the computer to execute any one of the focusing methods described above.

Beneficial Effects of the Embodiments of the Present Application:
As can be seen from the above, by applying the embodiments of the present application, when focusing the image acquisition device, the focal length of the image acquisition device can be adjusted according to the preset step length from the initial focal length position until the optimal focal length position is determined. In the focal length adjustment process, in response to adjusting the focal length position of the image acquisition device, the change trend of the image quality scores of the images of the target object acquired by the image acquisition device before and after the adjustment is determined, and the next focusing action is determined according to the change trend.

Based on this, the focal length position of the image acquisition device can be adjusted according to the change trend of the image quality scores of the images of the target object acquired by the image acquisition device before and after the focal length position adjustment, thereby determining the optimal focal length position. Thus, automatic focusing of the image acquisition device is achieved without using a distance sensor and without increasing the cost of the image acquisition device.

That is to say, by applying the solution provided by the embodiments of the present application, automatic focusing of the image acquisition device can be achieved without using a distance sensor. Therefore, it is unnecessary to install a distance sensor on the image acquisition device, thereby not increasing the cost of the image acquisition device and reducing the system complexity of the image acquisition device. Moreover, since the focusing of the image acquisition device on the target object is achieved when the distance between the target object and the image acquisition device changes, the solution provided by the embodiments of the present application can be widely applied to scenarios such as long-distance, large depth of field, real-time depth of field change photography, visual algorithm analysis, and so on.

Furthermore, since the image quality score is determined based on the image focusing score and the algorithm processing score of the image, and the algorithm processing score is used to characterize the processing effect obtained by performing algorithm processing on the image. Therefore, applying the embodiments of the present application to focus the image acquisition device can also make the image acquired by the focused image acquisition device have both a high focusing effect and a good processing effect regarding the target object.

That is to say, by applying the solution provided by the embodiments of the present application, while the image acquired by the focused image acquisition device can have a high focusing effect, performing algorithm processing on the target object in the image can also achieve a good processing effect. For example, while the image has high clarity, the difficulty of algorithm processing on the target object is reduced, and the algorithm recognition accuracy rate for the target object is improved.

Of course, implementing any product or method of the present application does not necessarily require achieving all the advantages mentioned above at the same time.

### Brief Description of the Drawings

The drawings described herein are provided for further understanding of the present application and constitute a part of the present application. The schematic embodiments and descriptions of the present application are used to explain the present application and do not constitute an improper limitation on the present application.
FIG. 1 is a schematic flow chart of an implementation of a focal length adjustment process in a focusing method according to an embodiment of the present application;
FIG. 2(a) is a schematic diagram of image quality scores changing with focal length positions according to an embodiment of the present application;
FIG. 2(b) is another schematic diagram of image quality scores changing with focal length positions according to an embodiment of the present application;
FIG. 3 is a schematic flow chart of another implementation of a focal length adjustment process in a focusing method according to an embodiment of the present application;
FIG. 4 is a flow chart of a specific implementation of S101;
FIG. 5 is a schematic structural diagram of a focusing module in a focusing apparatus according to an embodiment of the present application;
FIG. 6 is a schematic structural diagram of an electronic device according to an embodiment of the present application.

### Detailed Description

To make the objectives, technical solutions, and advantages of the present application clearer, the present application will be described in more detail below with reference to the accompanying drawings and embodiments. Obviously, the described embodiments are only some of the embodiments of the present application, not all of them. All other embodiments obtained based on the embodiments of the present application by those skilled in the art fall into the protection scope of the present application.

In related technologies, a distance sensor installed on the image acquisition device is usually utilized to achieve automatic focusing of the image acquisition device. That is, the distance between the target object and the image acquisition device is sensed with the aid of the distance sensor, and the focusing of the image acquisition device on the target object is realized based on the sensed distance. However, although using the distance sensor can achieve relatively fast and accurate focusing, installing the distance sensor on the image acquisition device leads to an increase in the production cost of the image acquisition device.

To solve the above problem, the embodiments of the present application provide a focusing method.

The focusing method provided by the embodiments of the present application can be applicable to various scenarios requiring focusing of an image acquisition device, such as, a scenario of using an image acquisition device to read a two-dimensional code or a bar code, a scenario of using an image acquisition device for target recognition, and so on. This is not specifically limited in the embodiments of the present application. Herein, the so-called focusing can refer to: the process of gradually making the image of the photographed object clear by changing the positions of the object distance and the image distance through the focusing mechanism of the image acquisition device, which can also be called aiming, converging, adjusting focus, etc. The process of focusing the image acquisition device is essentially a focal length adjustment process for the image acquisition device.

Furthermore, the method can be applied to various electronic devices capable of data processing. The electronic devices can be various image acquisition devices with a data processing function, such as cameras, video recorders, etc. with a data processing function; the electronic devices can also be various data processing devices with an image acquisition function, such as mobile phones with cameras, tablet computers with cameras, etc.; and the electronic devices can also be various other devices communicatively connected to an image acquisition device and having a data processing function, such as servers communicatively connected to a graphic recognition code scanning device, desktop computers communicatively connected to a camera, mobile phones communicatively connected to a graphic recognition code scanning device, etc. Moreover, the electronic devices can be independent electronic devices or a device cluster composed of multiple electronic devices. Furthermore, the above-mentioned electronic devices can include a camera module, a camera, an industrial camera, a code reading device, a handheld code reading device, a Personal Digital Assistant (PDA), a handheld scanner, and an electronic device integrating at least one of the aforementioned devices. This is not specifically limited in the embodiments of the present application, hereinafter referred to as electronic devices.

It is noted that, in the technical solutions of the present application, the acquisition, storage, use, processing, transmission, provision, and disclosure of user personal information involved are all carried out with the user's authorization.

The focusing method provided by an embodiment of the present application can include the following steps:
performing a focal length adjustment of an image acquisition device according to a preset step length from an initial focal length position of the image acquisition device, until an optimal focal length position is determined;
in response to performing the focal length position adjustment of the image acquisition device, determining a change trend of image quality scores of images of a target object acquired by the image acquisition device before and after the adjustment; wherein an image quality score is determined based on an image focusing score and/or an algorithm processing score; the algorithm processing score is configured to characterize a processing effect obtained by performing algorithm processing on the respective image;
in response to determining that the change trend is rising, maintaining a focusing direction unchanged;
in response to determining that the change trend is falling and the current change of the image quality scores is a first change, adjusting a focusing direction for a next focal length adjustment;
in response to determining that the change trend is falling and the change trend before and after an previous adjustment is rising, or, in response to determining that the change trend is falling and the current change of the image quality scores is not the first change, determining a focal length position before the current adjustment as the optimal focal length position.

As can be seen from the above, by applying the embodiment of the present application, when focusing the image acquisition device, the focal length of the image acquisition device can be adjusted according to the preset step length from the initial focal length position until the optimal focal length position is determined. In the focal length adjustment process, in response to adjusting the focal length position of the image acquisition device, the change trend of the image quality scores of the images of the target object acquired by the image acquisition device before and after the adjustment is determined, and the next focusing action is determined according to the change trend.

Based on this, the focal length position of the image acquisition device can be adjusted according to the change trend of the image quality scores of the images of the target object acquired by the image acquisition device before and after the focal length position adjustment, thereby determining the optimal focal length position. Thus, automatic focusing of the image acquisition device is achieved without using a distance sensor and without increasing the cost of the image acquisition device.

That is to say, by applying the solution provided by the embodiment of the present application, automatic focusing of the image acquisition device can be achieved without using a distance sensor. Therefore, it is unnecessary to install a distance sensor on the image acquisition device, thereby not increasing the cost of the image acquisition device and reducing the system complexity of the image acquisition device. Moreover, since the focusing of the image acquisition device on the target object is achieved when the distance between the target object and the image acquisition device changes, the solution provided by the embodiment of the present application can be widely applied to scenarios such as long-distance, large depth of field, real-time depth of field change photography, visual algorithm analysis, and so on.

Furthermore, since the image quality score is determined based on the image focusing score and the algorithm processing score of the image, and the algorithm processing score is used to characterize the processing effect obtained by performing algorithm processing on the image. Therefore, applying the embodiment of the present application to focus the image acquisition device can also make the image acquired by the focused image acquisition device have both a high focusing effect and a good processing effect regarding the target object.

That is to say, by applying the solution provided by the embodiment of the present application, while the image acquired by the focused image acquisition device can have a high focusing effect, performing algorithm processing on the target object in the image can also achieve a good processing effect. For example, while the image has high clarity, the difficulty of algorithm processing on the target object is reduced, and the algorithm recognition accuracy rate for the target object is improved.

Below, the focusing method provided by an embodiment of the present application will be specifically described with reference to the accompanying drawings.

The focusing method provided by an embodiment of the present application includes the following step 1:
Step 1: performing a focal length adjustment of an image acquisition device according to a preset step length from an initial focal length position of the image acquisition device, until an optimal focal length position is determined.

In the embodiments of the present application, the essence of focusing the image acquisition device is to perform the focal length adjustment of the image acquisition device to ultimately determine the optimal focal length position of the image acquisition device.

Before performing the focal length adjustment of the image acquisition device, the initial focal length position of the image acquisition device is determined first. For example, the current focal length position of the image acquisition device can be directly determined as the initial focal length position, or the initial focal length position can be preset by means of random determination, determination according to the focal length adjustment range of the image acquisition device, etc., and the focal length position of the image acquisition device can be adjusted to the preset initial focal length position. To initiate the focal length adjustment of the image acquisition device, the focusing direction for the first focal length adjustment and the preset step length also need to be determined. For example, the focusing direction for the first focal length adjustment can be determined randomly, or determined according to the above initial focal length position, etc. The above preset step length can be defined according to the actual condition in the application scenario, which is not specifically limited in the embodiments of the present application.

The above focusing position is essentially the focal length of the lens of the image acquisition device. According to the hardware characteristics of the image acquisition device and the precision requirements of the application scenario, the variation interval to which the set focal length position of the image acquisition device belongs can be called as the focal length range of the image acquisition device. When the focal length of the lens of the image acquisition device is a certain value within the above focal length range, the focusing position of the image acquisition device can be represented as the value. Furthermore, the above focusing direction can be understood as the direction that increases or decreases the focal length position (focal length) of the image acquisition device.

Thus, when the focal length position of the image acquisition device is at the initial focal length position, and the focusing direction for the first focal length adjustment and the preset step length are determined, the focal length adjustment of the image acquisition device is performed according to the preset step length from the initial focal length position of the image acquisition device, until the optimal focal length position is determined. Moreover, during the focal length adjustment process, the subsequent focal length adjustment action can be determined according to the change of the image qualities of the images of the target object acquired by the image acquisition device before and after the adjustment.

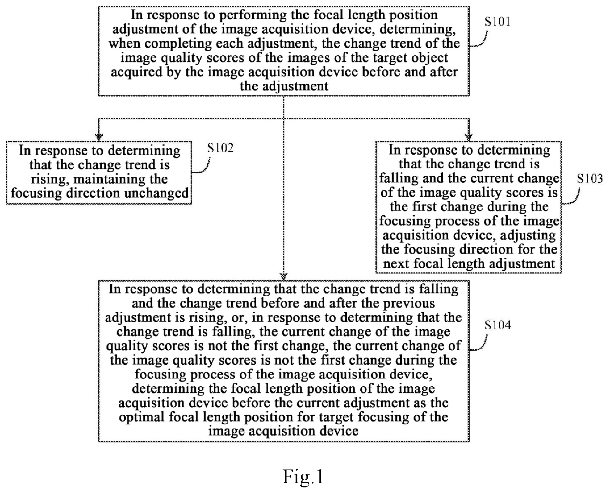

As shown in FIG. 1, it is a schematic flow chart of an implementation of the focal length adjustment process in the above focusing method. As shown in FIG. 1, the focal length adjustment process can include the following steps S101-S104.

S101: in response to performing the focal length position adjustment of the image acquisition device, determining a change trend of image quality scores of images of the target object acquired by the image acquisition device before and after the adjustment.

An image quality score is determined based on an image focusing score and/or an algorithm processing score; the algorithm processing score is used to characterize a processing effect obtained by performing algorithm processing on the respective image.

In the embodiment of the present application, the image acquisition device can acquire an image of the target object when the focal length position is the initial focal length position, and the focal length adjustment is completed. At each time such an image is acquired, the image focusing score and algorithm processing score of the image are determined. Then, the image quality score of the image is determined based on the image focusing score and the algorithm processing score.

The image focusing score can be a clarity score, a contrast score, a score output by an Artificial Intelligence (AI) model, etc. The image focusing score can reflect the focusing effect of the image, and the better the focusing effect of the image, the higher the image focusing score. Taking the clarity score as an example, the clarity score can reflect the clarity of the image, for example, can reflect the clarity of various detailed textures and their boundaries on the image, and thus the clearer the image, the higher the clarity score of the image.

The algorithm processing score can be used to characterize the processing effect obtained by performing algorithm processing on the image. This processing effect can be one kind or include multiple kinds. The better the processing effect, the higher the algorithm processing score of the image. Optionally, the processing effect can include but is not limited to at least one of recognition success rate, recognition accuracy rate, and recognition speed. For example, the algorithm processing score of the image can be determined based on the recognition success rate and recognition speed of the target object in the image.

The determination method of the algorithm processing score and its specific meaning can be set by those skilled in the art according to specific application situations, which is not specifically limited in the embodiments of the present application.

Optionally, the target object can be a graphic recognition code, and the algorithm processing score can include: a code reading score. The code reading score is a score for evaluating the quality of a graphic recognition code and the difficulty of algorithm recognition, which can be used to indicate the difficulty of recognizing the graphic recognition code in the current environment. Thus, the code reading score can be used to characterize the recognition success rate of the graphic recognition code in the image, or to characterize both the recognition success rate and recognition speed of the graphic recognition code in the image.

Optionally, the target object can be a specific object, and the algorithm processing score can include: an object recognition score. Moreover, the object recognition score can be used to characterize the recognition accuracy rate of the object in the image.

In summary, the image quality score is a score that combines the image focusing score and the algorithm processing score to indicate the imaging quality of the image. The higher the image quality score, the higher the imaging quality of the image.

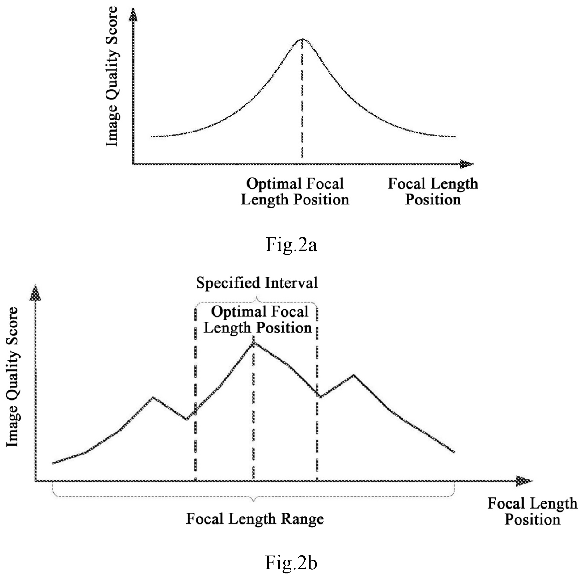

In the case of image acquisition of the target object, within the focal length range of the image acquisition device, there is a focal length position where the acquired image has the optimal image quality. This focal length position can serve as the optimal focal length position to be determined for this focusing. Typically, when the image acquisition device is at the optimal focusing position, the image quality score of the image of the target object acquired by the image acquisition device is also the highest. For example, as shown in FIG. 2(a), typically, when the image acquisition device is at the optimal focal length position, the image quality score of the acquired image of the target object is the highest. For each focal length position within the focal length range, the closer the focal length position is to the optimal focal length position, the higher the image quality score of the image of the target object acquired by the image acquisition device at that focal length position.

Therefore, in response to performing the focal length position adjustment of the image acquisition device, the change trend of the image quality scores of the images of the target object acquired by the image acquisition device before and after the adjustment is determined.

In response to performing each focal length position adjustment of the image acquisition device, the change trend of the image quality scores of the images of the target object acquired by the image acquisition device before and after each adjustment can be determined. That is, each focal length position adjustment of the image acquisition device is performed, the above change trend is determined once.

Alternatively, in response to multiple focal length position adjustments of the image acquisition device, the change trend of the image quality scores of the images of the target object acquired by the image acquisition device before and after the multiple adjustments can be determined. That is, the multiple focal length position adjustments of the image acquisition device at each time are performed, the above change trend is determined once. For example, from the first adjustment, after completing two focal length position adjustments, the above change trend is determined. In this case, when determining the change trend, the image quality score before the adjustments is the image quality score of the image acquired when the focal length position of the image acquisition device is at the initial focal length position, and the image quality score after the adjustments is the image quality score of the image acquired when completing the two focal length position adjustments.

The multiple adjustments can be a specified number of adjustments. Thus, the specified number of focal length position adjustments of the image acquisition device at each time are performed, the above change trend can be determined once. When determining the change trend, the image quality scores of the images acquired by the image acquisition device before and after the specified number of adjustments are compared. In this case, the specified number can be set by those skilled in the art according to specific application situations.

S102: in response to determining that the change trend is rising, maintaining the focusing direction unchanged.

If the change trend is rising, it indicates that the most recent adjustment has made the focal length position of the image acquisition device close to the optimal focal length position. Furthermore, if the focal length position adjustment of the image acquisition device is performed further along the focusing direction of the most recent focal length adjustment, the adjusted focal length position may get even closer to the optimal focal length position. Therefore, the focusing direction can be maintained unchanged. Consequently, during the next adjustment, the focal length position of the image acquisition device continues to be adjusted along the focusing direction of the most recent adjustment and according to the preset step length.

S103: in response to determining that the change trend is falling and a current change of the image quality score is a first change, adjusting the focusing direction for the next focal length adjustment.

If the change trend is falling, it indicates that the most recent adjustment has made the focal length position of the image acquisition device away from the target focal length position. Furthermore, if the current change of the image quality score is the first change during the focusing process of the image acquisition device, it indicates that from the initial focal length position, the focal length position adjustment of the image acquisition device is performed along the preset focusing direction for the first focal length adjustment, so that the focal length position of the image acquisition device is away from the optimal focal length position. Moreover, if the focal length position adjustment of the image acquisition device is performed further along the focusing direction for the first focal length adjustment, the adjusted focal length position will gradually move away from the optimal focal length position. Thus, to make the adjusted focal length position gradually approach the optimal focal length position, it is necessary to perform the focal length position adjustment of the image acquisition device in the opposite direction to the focusing direction for the first focal length adjustment. Therefore, the focusing direction for the next focal length adjustment is adjusted, i.e., adjusted to the opposite direction to the focusing direction for the first focal length adjustment. Consequently, during the next adjustment, the focal length position adjustment of the image acquisition device is performed along the opposite direction to the focusing direction for the first focal length adjustment and according to the preset step length.

Below, using the example of determining the change trend of the image quality scores of the images of the target object acquired by the image acquisition device before and after each adjustment, in response to performing each focal length position adjustment of the image acquisition device, the above step S103 is illustrated.

Example 1: Assuming that after the first adjustment, the change trend of the image quality score is falling, and the change of the image quality scores brought about by the first adjustment is the first change, then the focusing direction for the next focal length adjustment is adjusted to the opposite direction to the focusing direction for the first focal length adjustment. Subsequently, through the second adjustment, the focusing position of the image acquisition device is adjusted to the initial focal length position. The third adjustment process is to perform the focal length position adjustment of the image acquisition device along the opposite direction to the focusing direction for the first focal length adjustment and according to the preset step length.

Example 2: Assuming that after the first adjustment, the change trend of the image quality score is unchanged, that is, the image quality scores of the images acquired by the image acquisition device before and after the adjustment are not changed, then during the second adjustment, the focal length position adjustment of the image acquisition device is performed further along the focusing direction for the first focal length adjustment and according to the preset step length. Assuming that after the second adjustment, the change trend of the image quality score is falling, the change of the image quality scores brought about by the second adjustment is the first change. Thus, the focusing direction for the next focal length adjustment is adjusted to the opposite direction to the focusing direction for the first focal length adjustment. The third adjustment process is to perform the focal length position adjustment of the image acquisition device along the opposite direction to the focusing direction for the first focal length adjustment and according to the preset step length.

As mentioned above, the first focal length adjustment may or may not cause a change of the image quality scores before and after the adjustment. Therefore, the timing of the first change of the image quality scores can be: after the first focal length adjustment, or any focal length adjustment after the first focal length adjustment, such as the second focal length adjustment, the third focal length adjustment, etc. When the timing of the first change of the image quality scores is any focal length adjustment after the first focal length adjustment, then none of the focal length adjustments before that adjustment cause the change of the image quality scores before and after the adjustment.

S104: in response to determining that the change trend is falling and the change trend before and after the previous adjustment is rising, or, in response to determining that the change trend is falling and the current change of the image quality scores is not the first change, determining the focal length position before the current adjustment as the optimal focal length position.

In the above step S104, there are two situations:
First situation: In response to determining that the change trend is falling and the change trend before and after the previous adjustment is rising, determining the focal length position before the current adjustment as the optimal focal length position.

If the change trend is falling, it indicates that the most recent adjustment has made the focal length position of the image acquisition device away from the optimal focal length position. Furthermore, if the change trend before and after the previous adjustment is rising, it indicates that the previous adjustment has made the focal length position of the image acquisition device close to the optimal focal length position. For each focal length position, the closer the focal length position is to the optimal focal length position, the higher the image quality score of the image acquired by the image acquisition device at that focal length position. Therefore, when completing the previous focal length adjustment, the focal length position of the image acquisition device is closer to the optimal focal length position than the focal length position of the image acquisition device when completing the current focal length adjustment. Consequently, the focal length position of the image acquisition device before the current adjustment is the focal length position closest to the optimal focal length position during this focal length adjustment process. Thus, the focal length position before the current adjustment can be determined as the optimal focal length position.

Optionally, in some cases, in response to determining that the change trend before and after the current adjustment is falling, the change trend before and after the previous adjustment could also be falling. Similar to step S104 above, in response to determining that the change trend is falling and the change trend before and after the previous adjustment is rising, the focal length position before the current adjustment can also be determined as the optimal focal length position.

For example, if the change trend of the image quality scores before and after the first adjustment is falling, then the focusing direction for the second focal length adjustment is adjusted. Subsequently, if the change trend before and after the second adjustment is also falling, then the focal length position when completing the first adjustment is determined as the optimal focal length position.

In response to determining that the change trends of the image quality scores at the two consecutive times are falling, the previous focal length adjustment made the focal length position of the image acquisition device away from the optimal focal length position, and the current adjustment made the focal length position farther away from the optimal focal length position, exacerbating the deviation between the focal length position of the image acquisition device and the optimal focal length position. Therefore, the focal length position before the current adjustment can be determined as the optimal focal length position.

In summary, during the focusing adjustment process, in response to performing the focal length position adjustment of the image acquisition device, in response to determining that the change trend of the image quality scores before and after the adjustment is falling, and the change trend before and after the previous adjustment is rising or falling, the focal length position before the current adjustment is determined as the optimal focal length position.

Second situation: In response to determining that the change trend is falling and the current change of the image quality scores is not the first change, determining the focal length position before the current adjustment as the optimal focal length position.

If the change trend is falling, it indicates that the most recent adjustment has made the focal length position of the image acquisition device away from the optimal focal length position. Furthermore, if the current change of the image quality scores is not the first change, it indicates that the change trend before and after the previous adjustment is rising or falling. Obviously, regardless of whether the change trend before and after the previous adjustment is rising or falling, compared to the focal length position after the previous adjustment, the focal length position after the current adjustment is farther away from the optimal focal length position.

That is to say, in response to determining that the change trend is falling and the current change of the image quality scores is not the first change, the focal length position before the current adjustment is closer to the optimal focal length position than the focal length position after the current adjustment. Therefore, in response to determining that the change trend is falling and the current change of the image quality scores is not the first change, the focal length position before the current adjustment is determined as the optimal focal length position.

In the embodiment of the present application, the purpose of focusing the image acquisition device is to enable the focused image acquisition device to acquire an image of the target object that meets image quality requirements. Therefore, after obtaining the above optimal focal length position, the image acquisition device can be focused according to the optimal focal length position, and ultimately the image of the target object acquired by the image acquisition device when the focal length is at the optimal focal length position is obtained.

Optionally, the target object is a graphic recognition code, the algorithm processing score includes a code reading score, and the processing effect includes but is not limited to at least one of recognition success rate, recognition accuracy rate, and recognition speed.

As can be seen from the above, by applying the embodiment of the present application, when focusing the image acquisition device, the focal length adjustment of the image acquisition device can be performed according to the preset step length from the initial focal length position, until the optimal focal length position is determined. In the focal length adjustment process, in response to performing the focal length position adjustment of the image acquisition device, the change trend of the image quality scores of the images of the target object acquired by the image acquisition device before and after the adjustment is determined, and the next focusing action is determined according to the change trend.

Based on this, the focal length position of the image acquisition device can be adjusted according to the change trend of the image quality scores of the images of the target object acquired by the image acquisition device before and after the focal length position adjustment, thereby determining the optimal focal length position. Thus, automatic focusing of the image acquisition device is achieved without using a distance sensor and without increasing the cost of the image acquisition device.

That is to say, by applying the solution provided by the embodiment of the present application, automatic focusing of the image acquisition device can be achieved without using a distance sensor. Therefore, it is unnecessary to install a distance sensor on the image acquisition device, thereby not increasing the cost of the image acquisition device and reducing the system complexity of the image acquisition device. Moreover, since the focusing of the image acquisition device on the target object is achieved when the distance between the target object and the image acquisition device changes, the solution provided by the embodiment of the present application can be widely applied to scenarios such as long-distance, large depth of field, real-time depth of field change photography, visual algorithm analysis, and so on.

Furthermore, since the image quality score is determined based on the image focusing score and the algorithm processing score of the image, and the algorithm processing score is used to characterize the processing effect obtained by performing algorithm processing on the image. Therefore, applying the embodiment of the present application to focus the image acquisition device can also make the image acquired by the focused image acquisition device have both a high focusing effect and a good processing effect regarding the target object.

That is to say, by applying the solution provided by the embodiment of the present application, while the image acquired by the focused image acquisition device can have a high focusing effect, performing algorithm processing on the target object in the image can also achieve a good processing effect. For example, while the image has high clarity, the difficulty of algorithm processing on the target object is reduced, and the algorithm recognition accuracy rate for the target object is improved.

According to steps S101-S104, it can be seen that the image quality score at the above optimal focal length position is close to or is a peak in the curve of image quality scores changing with focal length positions. However, in real application scenarios, there may be multiple objects at different distances from the image acquisition device. For each of the multiple objects, the determined optimal focal length position may be different. That is, the multiple objects may each satisfy the condition of the highest image quality score of the image quality scores of different images acquired when the image acquisition device is at different focal length positions. Therefore, as shown in FIG. 2(b), in the curve of image quality scores changing with focal length positions, there may be multiple peaks. The existence of the multiple peaks may lead to insufficient accuracy of the optimal focusing position determined, and consequently, to poor focusing effect.

Optionally, in a specific implementation, the above step 1: performing the focal length adjustment of the image acquisition device according to the preset step length from the initial focal length position of the image acquisition device, until the optimal focal length position is determined, can include the following step 11.

Step 11: performing the focal length adjustment of the image acquisition device within a specified interval in a focal length range of the image acquisition device according to the preset step length from the initial focal length position of the image acquisition device, until the optimal focal length position is determined.

In the specific implementation, those skilled in the art can determine a specified interval in the focal length range of the image acquisition device according to the actual condition of the application scenario, for example, as shown in FIG. 2(b). Subsequently, during the focal length adjustment process, the focal length adjustment of the image acquisition device is performed according to the preset step length within the specified interval from the initial focal length position of the image acquisition device, until the optimal focal length position is determined.

By performing the focal length position adjustment of the image acquisition device, the distance between the focal plane of the image acquisition device and the image acquisition device can be changed. When the target object is precisely located on the focal plane, the image of the target object acquired by the image acquisition device can be made clearest. In the same application scenario, when the image acquisition device acquires images of various target objects, the distances between the image acquisition device and the respective target objects may all belong to the same distance interval. By adjusting the focal plane within this distance interval, the distance between the focal plane and the image acquisition device can be adjusted to complete the focusing of the image acquisition device on the target object.

For example, the target object can be a two-dimensional code on a cargo. The cargo may be located on a conveyor belt and move with it. The image acquisition device can be installed at a designated position 100 centimeters directly above the conveyor belt. The height of each cargo is no more than 50 centimeters and no less than 10 centimeters. Consequently, when the image acquisition device acquires images of the two-dimensional codes on various cargos, the distances between the image acquisition device and the respective two-dimensional codes may all belong to a distance interval of [50, 90] centimeters. For each two-dimensional code, by adjusting the focal plane within this distance interval, the distance between the focal plane and the image acquisition device can be adjusted to complete the focusing of the image acquisition device on the two-dimensional code.

Therefore, optionally, those skilled in the art can determine the specified interval in the focal length range of the image acquisition device based on the above distance interval.

Since the specified interval is determined by those skilled in the art in the focal length range of the image acquisition device according to the actual condition of the application scenario, in the curve of image quality scores changing with focal length positions, compared to the focal length range, there may be fewer peaks within the specified interval. Moreover, the probability that the focal length positions corresponding to peaks within the specified interval are the optimal focusing position is higher. Therefore, by applying this specific implementation for focusing, a better focusing effect can be achieved.

Furthermore, since the specified interval is smaller than the focal length range, the specified interval contains fewer focal length positions compared to the focal length range. Consequently, compared with determining the optimal focal length position in the focal length range, determining the optimal focal length position in the specified interval can be faster. That is to say, by applying this specific implementation, the focusing speed can also be improved.

However, in some cases, the above specified interval may not be accurate enough, resulting in the absence of the peak in the specified interval. When the focal length position is adjusted to the boundary position of the specified interval, if a case where the change trend is falling and the change trend before and after the previous adjustment is rising does not occur, it indicates that there is no peak in the specified interval. Then, the boundary position can be determined as the optimal focal length position of the image acquisition device.

Optionally, in a specific implementation, when the image acquisition device acquires an image of the target object, the image acquisition device may only output the image region where the target object is located in the image. Subsequently, based on the image focusing score and algorithm processing score of the image region where the target object is located, the image quality score of the image region where the target object is located can be determined.

Based on this, the influence of objects other than the target object in the application scenario on the image quality score can be reduced, enhancing the positive correlation between the image quality score and the imaging clarity of the target object and the algorithm processing effect. Consequently, for the situation shown in FIG. 2(b) where there are multiple peaks in the curve of image quality scores changing with focal length positions, by applying this specific implementation, the number of peaks within the focal length range can be reduced, thereby improving the accuracy of the determined optimal focal length position and enhancing the focusing effect of the image acquisition device.

Optionally, in a specific implementation, the focal length range of the image acquisition device can be pre-divided into at least two intervals.

Correspondingly, in this specific implementation, the above step 1: performing the focal length adjustment of the image acquisition device according to the preset step length from the initial focal length position of the image acquisition device, until the optimal focal length position is determined, can include the following steps 12-13.

Step 12: selecting an initial focal length position for each of the intervals, and performing the focal length adjustment of the image acquisition device within each of the intervals according to the preset step length from the initial focal length position selected for each of the intervals, until a local optimal focal length position within each of the intervals is determined.

Step 13: determining one of at least two determined local optimal focal length positions corresponding to the highest image quality score of the image quality scores of the images acquired, as the optimal focal length position.

In this specific implementation, the focal length range of the image acquisition device is pre-divided into at least two intervals. For each of the intervals, an initial focal length position can be selected within that interval. Then, from the initial focal length position selected for that interval, the focal length adjustment of the image acquisition device is performed within that interval according to the preset step length, until a local optimal focal length position within that interval is determined. Thus, at least two local optimal focal length positions can be obtained, and the image quality score of the image acquired by the image acquisition device at each local optimal focal length position can be obtained. Consequently, a local optimal focal length position of the at least two local optimal focal length positions which corresponds to the highest image quality score of the image quality scores of the images acquired can be determined as the optimal focal length position.

In this way, the optimal focal length position of the image acquisition device can be determined, achieving automatic focusing of the image acquisition device without using a distance sensor and without increasing the cost of the image acquisition device, and for a subsequent potential need to determine the optimal focal length position within a certain focal length interval, the local optimal focal length position belonging to the focal length interval can be directly selected from the at least two local optimal focal length positions as the finally obtained optimal focal length position. This can save subsequent focusing time for the image acquisition device and improve focusing efficiency.

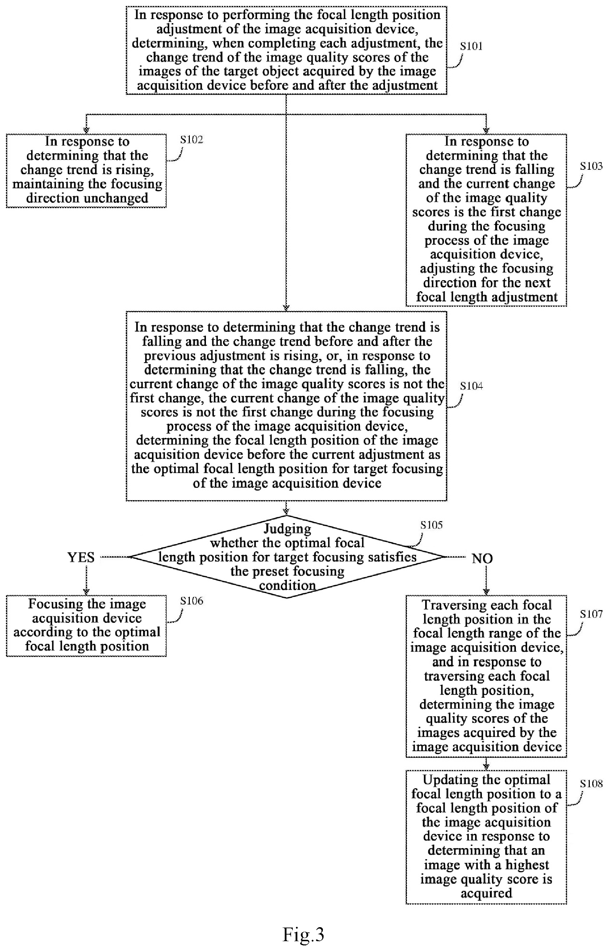

Optionally, in a specific implementation, as shown in FIG. 3, the focal length adjustment process in the focusing method provided by an embodiment of the present application can further include the following steps S105-S108.

S105: judging whether the optimal focal length position satisfies a preset focusing condition. In response to determining that the optimal focal length position satisfies the preset focusing condition, executing S106; in response to determining that the optimal focal length position does not satisfy the preset focusing condition, executing S107.

Since there may be multiple objects in the application scenario of the image acquisition device, and the distances between the multiple objects and the image acquisition device may be different, the clarity of each object in the images acquired when the image acquisition device is located at different focal length positions may also vary. Consequently, in the curve of image quality scores changing with focal length positions, there may be multiple peaks for the image quality scores. Therefore, the optimal focal length position determined may only be close to or be one of the multiple peaks, and is not the focal length position that satisfies the preset focusing condition.

That is to say, the optimal focal length position determined in the step S104 may not satisfy the preset focusing condition. Therefore, after obtaining the optimal focal length position, it is also possible to judge whether the obtained optimal focal length position satisfies the preset focusing condition.

The preset focusing condition can be set by those skilled in the art according to the actual condition of the application scenario, which is not specifically limited in the embodiments of the present application. For example, the preset focusing condition can be that the image quality score of the image acquired by the image acquisition device at the optimal focal length position is greater than a first score. As another example, the preset focusing condition can also be that the image quality score of the image acquired by the image acquisition device at the optimal focal length position is greater than the first score, and the algorithm processing score is greater than a second score.

S106: focusing the image acquisition device according to the optimal focal length position.

If the obtained optimal focal length position satisfies the preset focusing condition, the image acquisition device can be focused according to the optimal focal length position, so that the image acquisition device acquires an image of the target object at the optimal focal length position.

S107: traversing each focal length position within the focal length range of the image acquisition device, and when traversing each focal length position, determining the image quality scores of the images acquired by the image acquisition device.

If the obtained optimal focal length position does not satisfy the preset focusing condition, each focal length position within the focal length range of the image acquisition device can be traversed. When traversing each focal length position, the image quality scores of the images of the target object acquired by the image acquisition device are determined.

In some cases, considering the hardware characteristics of the image acquisition device, the focal length range of the image acquisition device is usually a discrete interval, which can include multiple discrete values, each discrete value being a focal length position of the image acquisition device.

In other cases, the focal length range of the image acquisition device can be a continuous interval, which can include a continuous range of values. Consequently, multiple discrete values can be screened within this continuous range of values, and each screened discrete value can be used as a focal length position of the image acquisition device. For example, from the minimum value of the focal length range, a discrete value is selected every set interval difference as a focal length position.

In this way, each focal length position within the determined focal length range can be traversed sequentially. When traversing each focal length position, the focal length of the image acquisition device is adjusted to that focal length position. When the image acquisition device is at that focal length position, the image acquisition device is controlled to acquire an image of the target object. Then, the image quality score of the image acquired is determined.

Optionally, from the minimum position in the focal length range of the image acquisition device, along the direction of increasing focal length position, a focal length position is determined every specified step length. When determining each focusing position, the image quality score of the image of the target object acquired by the image acquisition device at that focal length position is determined. Alternatively, from the maximum position in the focal length range of the image acquisition device, along the direction of decreasing focal length position, a focal length position is determined every specified step length. When determining each focusing position, the image quality score of the image of the target object acquired by the image acquisition device at that focal length position is determined.

Optionally, to improve the traversal speed of focal length positions and thereby improve focusing efficiency, when traversing each focal length position within the focal length range of the image acquisition device, only each focal length position within a specified interval may be traversed. Since the specified interval is an interval determined within the focal length range, the number of focal length positions in the specified interval can be less than the number of focal length positions in the focal length range. Consequently, compared to traversing each focal length position in the entire focal length range, traversing each focal length position within the specified interval may consume less time.

S108: updating the optimal focal length position to a focal length position of the image acquisition device in response to determining that an image with the highest image quality score is acquired.

After traversing each focal length position in the focal length range of the image acquisition device, the image quality score of the image of the target object acquired by the image acquisition device at each focal length position can be obtained. Consequently, the focal length position corresponding to the image with the highest image quality score, that is, the focal length position of the image acquisition device when acquiring the image with the highest image quality score, can serve as the optimal focal length. Thus, the optimal focal length position determined in the above step S106 can be updated to the focal length position of the image acquisition device in response to determining that the image with the highest image quality score is acquired.

After the optimal focal length position is updated, the image acquisition device can be focused according to the updated optimal focal length position, so that the image acquisition device acquires an image of the target object at the updated optimal focal length position. Based on this, by applying this specific implementation, the focusing accuracy can be further improved.

Optionally, in a specific implementation, the focusing method provided by an embodiment of the present application can further include the following steps 2-3.

Step 2: when the focal length position of the image acquisition device is the initial focal length position, and when completing each focal length adjustment, controlling the image acquisition device to acquire an image of the target object, and determining the image focusing score and the algorithm processing score of the image, respectively.

In this specific implementation, when the focal length position of the image acquisition device is at the initial focal length position, and when completing each focal length adjustment, the image acquisition device is controlled to acquire an image of the target object, and the image focusing score and algorithm processing score of the image acquired are determined, respectively.

In some application scenarios, the image acquisition device, when acquiring an image, needs to ensure that the image region where the target object is located in the image acquired is sufficiently clear, and that the target object acquired has a good algorithm processing effect. For example, when using a two-dimensional code scanning device to scan a two-dimensional code, it is necessary to ensure that the image region where the two-dimensional code is located in the image acquired is sufficiently clear, and that the two-dimensional code acquired is easily recognizable.

Based on this, optionally, in a specific implementation, in step 2, determining the image focusing score and the algorithm processing score of the image, can include the following step 21.

Step 21: determining a region of interest in the image for algorithm processing regarding the target object, and determining the image focusing score and algorithm processing score of the region of interest.

In this specific implementation, typically, for an image of the target object acquired by the image acquisition device, the higher the algorithm processing score of the image regarding the target object, the better the effect of performing algorithm processing (e.g., recognition) on the target object in the image. Therefore, when determining the image focusing score and the algorithm processing score of the image, the region of interest in the image for algorithm processing regarding the target object can first be determined. Then, the image focusing score and the algorithm processing score of the region of interest are determined. Consequently, the determined image focusing score of the region of interest can serve as the image focusing score of the image, and the determined algorithm processing score of the region of interest can serve as the algorithm processing score of the image.

The region of interest in the image for algorithm processing regarding the target object refers to the region in the image targeted by the algorithm when processing the target object in the image. Usually, the above region of interest is the region where the target object is located in the image.

Based on this, optionally, step 21 can include the following step 211.

Step 211: performing object recognition on the image, and determining an image region where a recognized detection bounding box including the target object is located as the region of interest for algorithm processing regarding the target object.

When acquiring an image of the target object captured by the image acquisition device, the object recognition can be performed on the image to recognize the target object in the image, obtaining a detection bounding box that includes the target object. Thus, the image region where the recognized detection bounding box including the target object is located can be determined as the region of interest for algorithm processing regarding the target object.

Based on this, since the clarity score and the algorithm processing score are determined based on the region of interest in the image for algorithm processing regarding the target object, and the image quality score is determined based on the clarity score and the algorithm processing score. Therefore, by applying this specific implementation, the positive correlation between the determined image quality score of each image and the clarity of the region of interest in the image and the algorithm processing effect can be enhanced, the influence of the imaging effect of objects other than the target object in the application scenario on the image quality score can be reduced.

Consequently, for situation shown in FIG. 2(b) where there are multiple peaks in the curve of image quality scores changing with focusing positions, by applying this specific implementation, the number of peaks within the focusing position interval can be reduced, thereby increasing the possibility that the determined target focusing position is the optimal focusing position, and improving the focusing effect of the image acquisition device.

Step 3: calculating a first product of the image focusing score and a preset image focusing weight, and a second product of the algorithm processing score and a preset algorithm processing weight, and calculating a sum of the first product and the second product as the image quality score of the image.

In this specific implementation, those skilled in the art can preset an image focusing weight for the image focusing score and an algorithm processing weight for the algorithm processing score according to the actual condition of the application scenario. Then, after determining the image focusing score and the algorithm processing score of the image, the first product of the image focusing score and the preset image focusing weight, and the second product of the algorithm processing score and the preset algorithm processing weight can be calculated. The sum of the first product and the second product is calculated, and the calculated sum can serve as the image quality score of the image.

For example, when the actual condition of the application scenario places more emphasis on performing algorithm processing on the image acquired by the image acquisition device, such as recognizing a two-dimensional code in the image acquired by the image acquisition device, the algorithm processing weight can be set to a large value, so that the image acquired by the image acquisition device at the target focusing position can have a better algorithm processing effect.

Optionally, in a specific implementation, before step 3, the focusing method provided by an embodiment of the present application can further include the following step 4.

Step 4: selecting, from a preset mapping relationship between multiple weight combinations and application scenarios, a target weight combination matching a current application scenario of the image acquisition device.

Each weight combination includes: one image focusing weight and one algorithm processing weight.

Correspondingly, in this specific implementation, step 3 can include the following step 31.

Step 31: calculating a first product of the image focusing score and the image focusing weight included in the target weight combination, and a second product of the algorithm processing score and the algorithm processing weight included in the target weight combination.

In this specific implementation, the application scenarios in which the image acquisition device performs image acquisition can be predetermined. Then, according to the requirements and emphasis on the focusing effect of the image and the algorithm processing of the target object in the image in each application scenario, the image focusing weight and algorithm processing weight for each application scenario can be determined as the weight combination corresponding to each application scenario. Thus, preset mapping relationships between multiple weight combinations and application scenarios are obtained. Each weight combination includes one image focusing weight and one algorithm processing weight.

Optionally, the mapping relationships can include:
a mapping relationship between an application scenario for performing object processing on the target object and a first weight combination; wherein the image focusing weight included in the first weight combination is less than the algorithm processing weight; and,
a mapping relationship between an image acquisition scenario where the target object does not exist and a second weight combination; wherein the algorithm processing weight included in the second weight combination is 0.

As mentioned above, in this specific implementation, when presetting the mapping relationship, when the application scenario places more emphasis on performing algorithm processing on the target object in the image, then a large algorithm processing weight needs to be set, so that the set image focusing weight is less than the algorithm processing weight. When the application scenario places more emphasis on the shooting effect of the image, for example, on shooting a clearer image of the target object, or when performing image shooting in response to determining that the target object does not exist and emphasizing on shooting a clearer environmental image, a small algorithm processing weight can be set, or even the algorithm processing weight can be 0.

Thus, when calculating the image quality score of the image acquired by the image acquisition device, the target weight combination matching the current application scenario of the image acquisition device can be selected from the preset mapping relationships between multiple weight combinations and application scenarios. Subsequently, when calculating the image quality score of the image acquired by the image acquisition device, the first product of the image focusing score and the image focusing weight included in the target weight combination, and the second product of the algorithm processing score and the algorithm processing weight included in the target weight combination can first be calculated. Then, the sum of the first product and the second product is calculated as the image quality score of the image acquired by the image acquisition device.

Based on this, by applying this specific implementation, the image focusing weight for the image focusing score and the algorithm processing weight for the algorithm processing score can be set according to the actual condition of the application scenario, so that the determined image quality score is more in line with the actual focusing needs in the application scenario, thereby further improving the focusing effect of the image acquisition device.

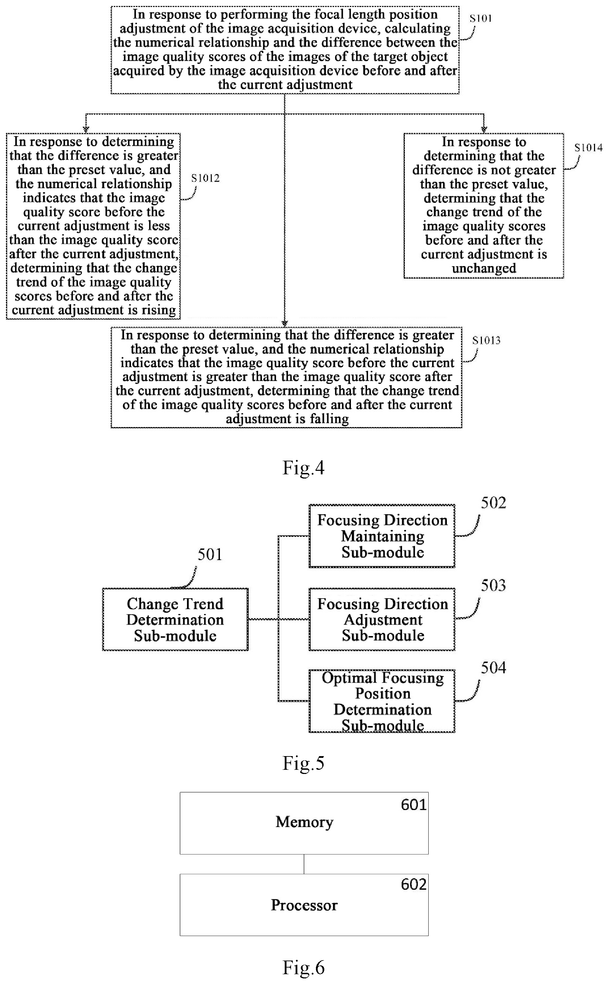

Optionally, in a specific implementation, as shown in FIG. 4, step S101: in response to performing the focal length position adjustment of the image acquisition device, determining the change trend of the image quality scores of the images of the target object acquired by the image acquisition device before and after the adjustment, can include the following steps S1011-S1014.

S1011: in response to performing the focal length position adjustment of the image acquisition device, calculating a numerical relationship and a difference between the image quality scores of the images of the target object acquired by the image acquisition device before and after the current adjustment.

In response to performing the focal length position adjustment of the image acquisition device, the numerical relationship between the image quality scores of the images of the target object acquired by the image acquisition device before and after the current adjustment can be calculated, and the difference between the image quality scores of the images of the target object acquired by the image acquisition device before and after the current adjustment can be calculated.

S1012: in response to determining that the difference is greater than a preset value, and the numerical relationship indicates that the image quality score before the current adjustment is less than the image quality score after the current adjustment, determining that the change trend of the image quality scores before and after the current adjustment is rising.

If the determined difference is greater than the preset value, and the determined numerical relationship indicates that the image quality score before the current adjustment is less than the image quality score after the current adjustment, it can be determined that the change trend of the image quality scores before and after the current adjustment is rising.

S1013: in response to determining that the difference is greater than the preset value, and the numerical relationship indicates that the image quality score before the current adjustment is greater than the image quality score after the current adjustment, determining that the change trend of the image quality scores before and after the current adjustment is falling.

If the determined difference is greater than the preset value, and the determined numerical relationship indicates that the image quality score before the current adjustment is greater than the image quality score after the current adjustment, it can be determined that the change trend of the image quality scores before and after the current adjustment is falling.

S1014: in response to determining that the difference is not greater than the preset value, determine that the change trend of the image quality scores before and after the current adjustment is unchanged.

If the determined difference is not greater than the preset value, it indicates that the change of the image quality scores before and after the current adjustment is small. Furthermore, since when the change of the image quality scores is small, the change of the image quality scores is likely caused by interference during the focal length adjustment process of the image acquisition device. Therefore, in order to reduce the impact of interference on the focal length adjustment process, when the difference is not greater than the preset value, it can be determined that the change trend of the image quality scores before and after the current adjustment is unchanged.

The preset value can be set by those skilled in the art according to the actual condition of the application scenario, which is not specifically limited in the embodiments of the present application.

Optionally, the focusing method provided by an embodiment of the present application can further include the following step 5.

Step 5: determining an adjustment ratio based on the image acquisition device, and calculating the preset value based on a preset reference value and the adjustment ratio.

Since different image acquisition devices may have different hardware characteristics, and different application scenarios may have different precision requirements for focal length adjustment, both the hardware characteristics and the precision requirements can affect the focusing process of the image acquisition device. Therefore, when determining the preset value, an adjustment ratio can first be determined based on the hardware characteristics, etc. of the image acquisition device itself. Then, the preset value can be calculated based on a preset reference value and the adjustment ratio. The preset reference value can be a physical parameter set at the factory for the image acquisition device, or a parameter preset by those skilled in the art according to the hardware characteristics, the application scenarios, etc. of the image acquisition device.

Correspondingly, the focusing method provided by an embodiment of the present application can further include the following step 6.

Step 6: in response to determining that the change trend is unchanged, maintaining the focusing direction unchanged.

If the change trend is unchanged, it cannot be determined whether the adjustment at the current made the focal length position of the image acquisition device close to or away from the optimal focal length position. Consequently, the process can return to step S102, and the adjustment is performed further along the specified focusing direction and according to the specified step length. Therefore, the focusing direction can be maintained unchanged. Thus, during the next adjustment, the focal length position adjustment of the image acquisition device is performed further along the focusing direction of the most recent adjustment and according to the preset step length.

Since an interference factor such as a jitter of the image acquisition device may cause an accidental change in the change trend of the image quality scores, and the optimal focal length position determined based on the accidental change in the change trend may have poor accuracy, leading to focusing failure. Therefore, in order to reduce the impact of the interference factor such as the jitter of the image acquisition device on the focusing result, the same change trends determined at the specified number of consecutive times can be determined as a valid change trend.

Based on this, optionally, in a specific implementation, step S103: in the case where the change trend is falling and the current change of the image quality scores is the first change, adjusting the focusing direction for the next focal length adjustment, can include the following step 1031.

Step 1031: in response to determining that the change trend is falling, a specified number of consecutive times at which the change trend is falling is reached, and a situation where the change trends have been the same for the specified number of consecutive times does not occur before the current adjustment, adjusting the focusing direction for the next focal length adjustment.

In response to performing the focal length position adjustment of the image acquisition device, if the change trend of the image quality scores of the images of the target object acquired by the image acquisition device before and after the current adjustment is falling, and the specified number of consecutive times at which the change trend is falling is reached, then the change trend of the image quality score before and after the current adjustment is a valid change trend. Furthermore, if a situation where the change trends have been the same for the specified number of consecutive times does not occur before the current adjustment, it indicates that the current change of the image quality scores is the first valid change of the image quality scores during the focal length adjustment process of the image acquisition device. Then, the focusing direction for the next focal length adjustment can be adjusted, that is, adjusted to the opposite direction to the focusing direction for the first focal length adjustment. Consequently, during the next adjustment, the focusing position adjustment of the image acquisition device is performed along the opposite direction to the focusing direction for the first focal length adjustment and according to the preset step length.

That is to say, in this specific implementation, the first change of the image quality scores can be understood as: the first valid change of the image quality scores. The first valid change of the image quality scores is: the change of the image quality scores caused by the last adjustment of the adjustments at the specified number of consecutive times when a situation where the change trends of the image quality scores caused by the adjustments have been the same for the specified number of consecutive times occurs for the first time during the focusing process. Correspondingly, when after the situation where the change trends of the image quality scores caused by the adjustments have been the same for the specified number of consecutive times occurs for the first time, the situation where the change trends of the image quality scores caused by the adjustments have been the same for the specified number of consecutive times occurs again, the last change of the image quality scores caused by the last adjustments at the specified number of consecutive times can be considered as a valid change of the image quality scores, which is not the first valid change of the image quality scores.

For example, assuming the specified number is 3, during the focusing process of the image acquisition device, after the first adjustment, the change trend of the image quality scores is falling. At this point, since the situation where the change trends of the image quality scores caused by the adjustments at the specified number of consecutive times are the same is not satisfied, the first adjustment cannot be considered as the first valid change of the image quality scores. Then, the second adjustment is further performed. After the second adjustment, the change trend of the image quality scores is still falling. At this point, since the situation where the change trends of the image quality scores caused by the adjustments at the specified number of consecutive times are the same is still not satisfied, the second adjustment still cannot be considered as the first valid change of the image quality scores. Thus, the third adjustment is further performed. After the third adjustment, the change trend of the image quality scores is still falling. At this point, the change trends before and after the first adjustment, the second adjustment, and the third adjustment are all falling. Before the third adjustment, a situation where the change trends determined have been the same for three consecutive times does not occur. Therefore, when completing the third adjustment, the situation where the change trends of the image quality scores caused by the adjustments have been the same for the three consecutive times occurs for the first time. Consequently, the change of the image quality scores caused by the third adjustment is the first valid change of the image quality score. Since the change trends before and after the first, the second, and third adjustments are all falling, the focusing direction for the next focal length adjustment can be adjusted when completing the third adjustment.

Correspondingly, step S104: in the case where the change trend is falling and the change trend before and after the previous adjustment is rising, determining the focal length position before the current adjustment as the optimal focal length position, can include the following step 1041.

Step 1041: in response to determining that the change trend is falling, a specified number of consecutive times at which the change trend is falling is reached, and a situation where the change trends have been the same for the specified number of consecutive times occurs before the current adjustment, determining a focal length position before a first adjustment of adjustments at the specified number of consecutive times including the current adjustment, as the optimal focal length position.

In response to performing the focal length position adjustment of the image acquisition device, if before the current adjustment, a situation where the change trends determined have been the same for the specified number of consecutive times occurs, it indicates that the current change of the image quality scores is not the first change of the image quality scores in the focal length adjustment process. Furthermore, if the change trend is falling, the specified number of consecutive times at which the change trend is falling is reached, and a situation where the change trends have been the same for the specified number of consecutive times occurs before the current adjustment, the focal length position before the first adjustment of the adjustments at the specified number of consecutive times including the current adjustment can be determined as the optimal focal length position.

For example, assuming the specified number is 3, during the focusing process of the image acquisition device, the change trends caused by the first, the second, and the third adjustments are all rising. Then, the change of the image quality scores caused by the third adjustment is the first valid change of the image quality scores. The change trends caused by the fourth, the fifth, and the sixth adjustments are all falling. Then, the change of the image quality scores caused by the sixth adjustment is the second valid change of the image quality scores. At this point, the focal length position of the image acquisition device before the fourth adjustment can be determined as the optimal focal length position.

Correspondingly, in this specific implementation, as mentioned above, during the focal length adjustment process, if the determined change trend is falling, and the determined change trends at the specified number of consecutive times are not all falling, it indicates that when completing the current adjustment, although the changes of the image quality scores occur for the specified number of times, since the change trends for the changes at the specified number of times are not all the same, the change of the image quality scores caused by the current adjustment cannot be considered as the valid change of the image quality scores. Then, the focusing direction is unchanged, and the focal length adjustment is further performed.

Based on this, by applying this specific implementation, the focusing direction for the next focal length adjustment is adjusted or the optimal focal length position is determined only when the change trends determined at the specified number of consecutive times are the same. Therefore, the impact of interference factor such as the jitter of the image acquisition device on the change trend of the image quality scores can be reduced, further improving focusing accuracy.

Optionally, in a specific implementation, step 1: performing the focal length adjustment of the image acquisition device according to the preset step length from the initial focal length position, until the optimal focal length position is determined, can include the following steps 14-15.

Step 14: obtaining the initial focal length position of the image acquisition device and a focusing direction for a first focal length adjustment.

Before performing the focal length adjustment of the image acquisition device, the initial focal length position and the focusing direction for the first focal length adjustment can be preset. Thus, when performing the focal length adjustment of the image acquisition device, the focal length position of the image acquisition device is first adjusted to the preset initial focal length position.

Those skilled in the art can set the focusing direction for the first focal length adjustment and the initial focal length position according to the actual condition of the application scenario, which is not specifically limited in the embodiments of the present application.

Optionally, step 14 can include the following step 141.

Step 141: obtaining a preset initial focal length position of the image acquisition device and a preset focusing direction for the first focal length adjustment.

Those skilled in the art can randomly set the initial focal length position of the image acquisition device and the focusing direction for the first focal length adjustment. Thus, the electronic device can obtain the preset initial focal length position of the image acquisition device and the preset focusing direction for the first focal length adjustment.

For example, the initial focal length position can be the middle position of the focal length range of the image acquisition device. For instance, the focal length range of the image acquisition device can be [0, Pₘₐₓ], and the initial focusing position can be (Pₘₐₓ/2). Here, Pₘₐₓ is the maximum focal length that can be set for the image acquisition device.

Optionally, step 14 can include the following steps 142-145.
Step 142: obtaining a historical optimal focal length position of the image acquisition device as the initial focal length position;
Step 143: comparing the initial focal length position with the middle position of the focal length range of the image acquisition device;
Step 144: in response to determining that the initial focal length position is less than the middle position, determining a focusing direction that increases an adjusted focal length position as the focusing direction for the first focal length adjustment;
Step 145: in response to determining that the initial focal length position is greater than the middle position, determining a focusing direction that decreases the adjusted focal length position as the focusing direction for the first focal length adjustment.

Those skilled in the art can set a historical optimal focal length position of the image acquisition device as the initial focal length position of the image acquisition device. Thus, the electronic device can obtain the historical optimal focal length position of the image acquisition device as the initial focal length position. For example, if the optimal focal length position determined when focusing the image acquisition device at the previous time is P₁, then the initial focal length position for the current focusing can be P₁.

Since the optimal focal length position is usually close to the middle position of the focal length range, in order to reduce the number of focal length adjustments and improve focusing speed, the focusing direction for the first focal length adjustment can be determined based on the size relationship between the initial focal length position and the middle position of the focal length range of the image acquisition device.

The initial focal length position is compared with the middle position of the focal length range of the image acquisition device to determine the size relationship between the initial focal length position and the middle position.

In response to determining that the initial focal length position is less than the middle position, in order to make the adjusted focal length approach the middle position as quickly as possible, a focusing direction that increases the adjusted focal length position is determined as the focusing direction for the first focal length adjustment. In response to determining that the initial focal length position is greater than the middle position, in order to make the adjusted focal length approach the middle position as quickly as possible, a focusing direction that decreases the adjusted focal length position is determined as the focusing direction for the first focal length adjustment.

Step 15: performing the focal length adjustment of the image acquisition device according to the focusing direction for the first focal length adjustment and the preset step length from the initial focal length position.

After obtaining the initial focal length position of the image acquisition device and the focusing direction for the first focal length adjustment, from the initial focal length position, the focal length adjustment of the image acquisition device is performed according to the focusing direction for the first focal length adjustment and the preset step length. During the first focal length adjustment, from the initial focal length position, the focal length adjustment of the image acquisition device is performed along the focusing direction for the first focal length adjustment according to the preset step length.

For example, if the focusing direction for the first focal length adjustment is the direction that decreases the focal length position, the preset step length is ΔP, and the initial focal length position is P_{mid}, then when completing the first focal length adjustment, the focal length position of the image acquisition device is adjusted from P_{mid} to (P_{mid} - ΔP). If the focusing direction is maintained unchanged, then when completing the second adjustment, the focal length position of the image acquisition device is adjusted again to (P_{mid} - 2ΔP).

For example, in order to better understand the focusing method provided by an embodiment of the present application, the focusing method provided by an embodiment of the present application can include the following steps 71-79.

In this example, the focal length range of the image acquisition device is [0, Pₘₐₓ], the initial focal length position is the middle value P_{mid} of the focal length range; the focusing direction that increases the focal length position is taken as the positive direction, the focusing direction that decreases the focal length position is taken as the negative direction, and the focusing direction for the first focal length adjustment is the positive direction. Here, the positive direction and the negative direction are opposite to each other; the preset step length is ΔP; the threshold for determining the trend change of the image quality scores as valid is Pₜ, that is, the preset value is Pₜ.

Step 71: determining the positive direction as the focusing direction for the first focal length adjustment, adjusting the focal length position of the image acquisition device to P_{mid}, and controlling the image acquisition device to acquire an image 1 of the target object when the focal length position is adjusted to P_{mid}.

Step 72: determining the image quality score of the image 1 acquired in step 71.

Step 73: adjusting the focal length position of the image acquisition device by ΔP in the positive direction, and controlling the image acquisition device to acquire an image 2 of the target object when completing the adjustment.

Step 74: for the adjustment in step 73, denoting the image quality score of the image 1 of the target object acquired by the image acquisition device at the focal length position before the current adjustment as S1, and determining the image quality score S2 of the image 2 acquired in step 73.

Step 75: according to the numerical relationship and the difference between S1 and S2, determining the change trend of the image quality scores before and after the current adjustment:
(1) If S2 is greater than S1, and |S2-S1| is greater than Pₜ, determining that the change trend of the image quality scores before and after the current adjustment is rising, maintaining the focusing direction as the positive direction unchanged, and then returning to step 73;
(2) If |S2-S1| is not greater than Pₜ, determining that the change trend of the image quality scores before and after the current adjustment is unchanged, maintaining the focusing direction as the positive direction unchanged, and then returning to step 73;
(3) If S1 is greater than S2, and |S2-S1| is greater than Pₜ, determining that the change trend of the image quality scores before and after the current adjustment is falling;

If |S2-S1| is not greater than Pₜ for the first time during the focal length adjustment process, determining the focal length position of the image acquisition device before the current adjustment as the optimal focal length position;
If |S2-S1| is greater than Pₜ for the first time during the focal length adjustment process, executing step 76.

Step 76: adjusting the focusing direction for the next focal length adjustment to the opposite direction (the negative direction) to the positive direction.

Step 77: adjusting the focal length position of the image acquisition device by ΔP in the negative direction, and controlling the image acquisition device to acquire an image 3 of the target object when completing the adjustment.

Step 78: for the adjustment in step 77, denoting the image quality score of the image of the target object acquired by the image acquisition device at the focusing position before the current adjustment as S1, and determining the image quality score S2 of the image 3 acquired in step 77.

Step 79: according to the numerical relationship and the difference between S1 and S2, determining the change trend of the image quality scores before and after the current adjustment:
(1) If S2 is greater than S1, and |S2-S1| is greater than Pₜ, determining that the change trend of the image quality scores before and after the current adjustment is rising, maintaining the focusing direction as the negative direction unchanged, and then returning to step 77;
(2) If |S2-S1| is not greater than Pₜ, determining that the change trend of the image quality scores before and after the current adjustment is unchanged, maintaining the focusing direction as the negative direction unchanged, and then returning to step 77;
(3) If S1 is greater than S2, and |S2-S1| is greater than Pₜ, determining that the change trend of the image quality scores before and after the current adjustment is falling, and the current change of the image quality scores is not the first change, then determining the focal length position of the image acquisition device before the current adjustment as the optimal focal length position.

Corresponding to the focusing method provided by the embodiments of the present application, the embodiments of the present application also provide a focusing apparatus. The apparatus includes a focusing module, and the focusing module is configured to perform a focal length adjustment of an image acquisition device according to a preset step length from an initial focal length position of the image acquisition device, until an optimal focal length position is determined. FIG. 5 is a schematic structural diagram of the focusing module. As shown in FIG. 5, the focusing module can include the following sub-modules:
a change trend determination sub-module 501, configured to, in response to performing the focal length position adjustment of the image acquisition device, determine a change trend of image quality scores of images of a target object acquired by the image acquisition device before and after the adjustment; wherein an image quality score is determined based on an image focusing score and/or an algorithm processing score; the algorithm processing score is configured to characterize a processing effect obtained by performing algorithm processing on the respective image;
a focusing direction maintaining sub-module 502, configured to, in response to determining that the change trend is rising, maintain a focusing direction unchanged;
a focusing direction adjustment sub-module 503, configured to, in response to determining that the change trend is falling and a current change of the image quality scores is a first change, adjust a focusing direction for a next focal length adjustment;
an optimal focusing position determination sub-module 504, configured to, in response to determining that the change trend is falling and a change trend before and after a previous adjustment is rising, or, in response to determining that the change trend is falling and the current change of the image quality scores is not the first change, determine a focal length position before the current adjustment as the optimal focal length position.

As can be seen from the above, by applying the embodiment of the present application, when focusing the image acquisition device, the focal length of the image acquisition device can be adjusted according to the preset step length from the initial focal length position until the optimal focal length position is determined. In the focal length adjustment process, in response to adjusting the focal length position of the image acquisition device, the change trend of the image quality scores of the images of the target object acquired by the image acquisition device before and after the adjustment is determined, and the next focusing action is determined according to the change trend

Based on this, the focal length position of the image acquisition device can be adjusted according to the change trend of the image quality scores of the images of the target object acquired by the image acquisition device before and after the focal length position adjustment, thereby determining the optimal focal length position. Thus, automatic focusing of the image acquisition device is achieved without using a distance sensor and without increasing the cost of the image acquisition device.

That is to say, by applying the solution provided by the embodiment of the present application, automatic focusing of the image acquisition device can be achieved without using a distance sensor. Therefore, it is unnecessary to install a distance sensor on the image acquisition device, thereby not increasing the cost of the image acquisition device and reducing the system complexity of the image acquisition device. Moreover, since the focusing of the image acquisition device on the target object is achieved when the distance between the target object and the image acquisition device changes, the solution provided by the embodiment of the present application can be widely applied to scenarios such as long-distance, large depth of field, real-time depth of field change photography, visual algorithm analysis, and so on.

Furthermore, since the image quality score is determined based on the image focusing score and the algorithm processing score of the image, and the algorithm processing score is used to characterize the processing effect obtained by performing algorithm processing on the image. Therefore, applying the embodiment of the present application to focus the image acquisition device can also make the image acquired by the focused image acquisition device have both a high focusing effect and a good processing effect regarding the target object.

That is to say, by applying the solution provided by the embodiment of the present application, while the image acquired by the focused image acquisition device can have a high focusing effect, performing algorithm processing on the target object in the image can also achieve a good processing effect. For example, while the image has high clarity, the difficulty of algorithm processing on the target object is reduced, and the algorithm recognition accuracy rate for the target object is improved.

Optionally, in a specific implementation, a focal length range of the image acquisition device is pre-divided into at least two intervals; the focusing module is specifically configured to:
select an initial focal length position for each of the intervals, and perform the focal length adjustment of the image acquisition device within each of the intervals according to the preset step length from the initial focal length position selected for each of the intervals, until a local optimal focal length position within each of the intervals is determined;
determine one of at least two determined local optimal focal length positions corresponding to a highest image quality score of the image quality scores of the images acquired, as the optimal focal length position.

Optionally, in a specific implementation, the focusing module is specifically configured to:
perform the focal length adjustment of the image acquisition device within a specified interval in a focal length range of the image acquisition device according to the preset step length from the initial focal length position of the image acquisition device, until the optimal focal length position is determined.

Optionally, in a specific implementation, the focusing module further includes:
an information obtaining sub-module, configured to obtain the initial focal length position of the image acquisition device and a focusing direction for a first focal length adjustment;
the focusing module is specifically configured to perform the focal length adjustment of the image acquisition device according to the focusing direction for the first focal length adjustment and the preset step length from the initial focal length position.

Optionally, in a specific implementation, the information obtaining sub-module is specifically configured to:
obtain a preset initial focal length position of the image acquisition device and a preset focusing direction for the first focal length adjustment; or,
obtain a historical optimal focal length position of the image acquisition device as the initial focal length position; compare the initial focal length position with a middle position of a focal length range of the image acquisition device; in response to determining that the initial focal length position is less than the middle position, determine a focusing direction that increases an adjusted focal length position as the focusing direction for the first focal length adjustment; in response to determining that the initial focal length position is greater than the middle position, determine a focusing direction that decreases the adjusted focal length position as the focusing direction for the first focal length adjustment.

Optionally, in a specific implementation, the apparatus further includes:
a score determination module, configured to, in response to a focal length position of the image acquisition device being the initial focusing position, and in response to completion of each focal length adjustment, control the image acquisition device to acquire an image of the target object, and determine an image focusing score and an algorithm processing score of the image, respectively;
a score calculation module, configured to calculate a first product of the image focusing score and a preset image focusing weight, and a second product of the algorithm processing score and a preset algorithm processing weight, and calculate a sum of the first product and the second product as the image quality score of the image.

Optionally, in a specific implementation, the apparatus further includes:
a weight selection module, configured to, before calculating the first product of the image focusing score and the preset image focusing weight, and the second product of the algorithm processing score and the preset algorithm processing weight, select, from preset mapping relationships between multiple weight combinations and application scenarios, a target weight combination matching a current application scenario of the image acquisition device; wherein each weight combination comprises: one image focusing weight and one algorithm processing weight;
the score calculation module is specifically configured to calculate a first product of the image focusing score and the image focusing weight comprised in the target weight combination, and a second product of the algorithm processing score and the algorithm processing weight comprised in the target weight combination.

Optionally, in a specific implementation, the mapping relationships include:
a mapping relationship between an application scenario for performing object processing on the target object and a first weight combination; wherein the image focusing weight comprised in the first weight combination is less than the algorithm processing weight; and,
a mapping relationship between an image acquisition scenario where the target object does not exist and a second weight combination; wherein the algorithm processing weight comprised in the second weight combination is 0.

Optionally, in a specific implementation, the score determination module includes:
a region determination sub-module, configured to determine a region of interest in the image for algorithm processing regarding the target object;
a score determination sub-module, configured to determine an image focusing score and an algorithm processing score of the region of interest.

Optionally, in a specific implementation, the region determination sub-module is specifically configured to:
perform object recognition on the image, and determine an image region where a recognized detection bounding box comprising the target object is located as the region of interest for algorithm processing regarding the target object.

Optionally, in a specific implementation, the change trend determination sub-module 501 is specifically configured to:
in response to performing the focal length position adjustment of the image acquisition device, calculate a numerical relationship and a difference between the image quality scores of the images of the target object acquired by the image acquisition device before and after the current adjustment;
in response to determining that the difference is greater than a preset value, and the numerical relationship indicates that the image quality score before the current adjustment is less than the image quality score after the current adjustment, determine that the change trend of the image quality scores before and after the current adjustment is rising;
in response to determining that the difference is greater than the preset value, and the numerical relationship indicates that the image quality score before the current adjustment is greater than the image quality score after the current adjustment, determine that the change trend of the image quality scores before and after the current adjustment is falling;
in response to determining that the difference is not greater than the preset value, determine that the change trend of the image quality scores before and after the current adjustment is unchanged;
the focusing direction maintaining sub-module is further configured to, in response to determining that the change trend is unchanged, maintain the focusing direction unchanged.

Optionally, in a specific implementation, the apparatus further includes:
a numerical adjustment module, configured to determine an adjustment ratio based on the image acquisition device, and calculate the preset value based on a preset reference value and the adjustment ratio.

Optionally, in a specific implementation,
the focusing direction adjustment sub-module 502 is specifically configured to, in response to determining that the change trend is falling, a specified number of consecutive times at which the change trend is falling is reached, and a situation where the change trends have been the same for the specified number of consecutive times does not occur before the current adjustment, adjust the focusing direction for the next focal length adjustment;
the optimal focusing position determination sub-module 503 is specifically configured to, in response to determining that the change trend is falling, the specified number of consecutive times at which the change trend is falling is reached, and a situation where the change trends have been the same for the specified number of consecutive times occurs before the current adjustment, determine a focal length position before a first adjustment of adjustments at the specified number of consecutive times comprising the current adjustment, as the optimal focal length position.

Optionally, in a specific implementation, the apparatus further includes:
a focusing judgment module, configured to judge whether the optimal focal length position satisfies a preset focusing condition; in response to determining that the optimal focal length position satisfies the preset focusing condition, trigger a device focusing module, in response to determining that the optimal focal length position does not satisfy the preset focusing condition, trigger a position traversal module;
the device focusing module is configured to focus the image acquisition device according to the optimal focusing position;
the position traversal module is configured to traverse each focal length position within a focal length range of the image acquisition device, and in response to traversing each focal length position, determine the image quality scores of the images acquired by the image acquisition device;
a position update module, configured to update the optimal focal length position to a focal length position of the image acquisition device in response to determining that an image with a highest image quality score is acquired.

Optionally, in a specific implementation, the target object is a graphic recognition code, the algorithm processing score comprises: a code reading score, and the processing effect comprises but is not limited to at least one of recognition success rate, recognition accuracy rate, and recognition speed.

The embodiments of the present application also provide an electronic device. As shown in FIG. 6, the electronic device includes:
a memory 601, configured to store a computer program;
a processor 602, configured to execute the computer program stored on the memory 601 to implement any one of the focusing methods provided by the embodiments of the present application.

The electronic device may also include a communication bus and/or a communication interface. The processor 602, the communication interface, and the memory 601 communicate with each other via the communication bus.

The communication bus mentioned by the above-mentioned network device can be a peripheral component interconnect (PCI) bus or an extended industry standard architecture (EISA) bus. The communication bus can be classified into address bus, data bus and control bus. For the convenience of representation, the communication in the figure is only represented by a thick line, but it does not mean that there is only one bus or one type of bus.

The communication interface is used for communication between the above-mentioned network device and other devices.

The memory may comprise Random Access Memory (RAM) or Non-Volatile Memory (NVM), such as at least one disk memory. Optionally, the memory can also be at least one storage apparatus located far away from the aforementioned processor.

The processor can be a general processor, comprising a Central Processing Unit (CPU) and a Network Processor (NP). It can also be a Digital Signal Processor (DSP), an application specific integrated circuit (ASIC), a Field-Programmable Gate Array (FPGA) or other programmable logical means, discrete gate or transistor logical means and discrete hardware components.

The electronic device may be a lens component, a camera component, a focusing component, etc., and a device including at least one of the above components, such as a camera, a mobile phone, a personal terminal, a handheld scanner, etc.

In yet another embodiment provided by the present application, a computer-readable storage medium is also provided. The computer-readable storage medium stores a computer program, and the computer program, when executed by a processor, implements the steps of any one of the focusing methods described above.

In yet another embodiment provided by the present application, a computer program product comprising an instruction is also provided. The computer program product, when running on a computer, causes the computer to execute any one of the focusing methods of the above embodiments.

The embodiments can be realized in whole or in part by software, hardware, firmware or any combination thereof. When implemented in software, the embodiments can be fully or partially implemented in the form of a computer program product. The computer program product comprises one or more computer instructions. When the computer program instruction is loaded and executed on a computer, the process or function described in the example of the present disclosure is generated in whole or in part. The computer can be a general-purpose computer, a special-purpose computer, a computer network, or other programmable apparatuses. The computer instruction can be stored in a computer-readable storage medium or transmitted from one computer-readable storage medium to another. For example, the computer instruction can be transmitted from one website, computer, server or data center to another website, computer, server or data center by wired (such as coaxial cable, optical fiber, digital subscriber line (DSL)) or wireless (such as infrared, wireless, microwave, etc.). The computer-readable storage medium can be any available medium that a computer can access or a data storage device such as a server, a data center and the like that contains one or more available medium. The available medium may be a magnetic medium (e.g., floppy disk, hard disk, magnetic tape), an optical medium (e.g., DVD), or a semiconductor medium (e.g., Solid State Disk (SSD)) and the like.

It should be noted that, in this document, relational terms such as first and second are only used to distinguish one entity or operation from another entity or operation, and do not necessarily require or imply any such actual relationship or order between these entities or operations. Furthermore, the terms "include", "comprise", or any other variation thereof are intended to cover a non-exclusive inclusion, such that a process, method, article, or equipment that includes a list of elements includes not only those elements but may also include other elements not expressly listed or inherent to such process, method, article, or device. Without further limitation, an element defined by the phrase "comprise a ..." does not exclude the existence of additional identical elements in the process, method, article, or device that includes the element.

Various embodiments in this specification are described in a related manner, and identical or similar parts between various embodiments may be referred to each other. Each embodiment focuses on describing differences from other embodiments. Especially, for apparatus embodiments, electronic device embodiments, computer-readable storage medium embodiments, and computer program product embodiments, since they are basically similar to method embodiments, the description is relatively simple. For relevant parts, reference may be made to partial descriptions in the method embodiments.

Only preferred embodiments of the present application are described above and are not intended to limit the present application. Any modifications, equivalent replacements, improvements, etc., made within the spirit and principle of the present application shall be included within the protection scope of the present application.

## Claims

1. A focusing method, wherein the method comprises:
performing a focal length adjustment of an image acquisition device according to a preset step length from an initial focal length position of the image acquisition device, until an optimal focal length position is determined;
in response to performing the focal length position adjustment of the image acquisition device, determining a change trend of image quality scores of images of a target object acquired by the image acquisition device before and after the adjustment; wherein, an image quality score is determined based on an image focusing score and/or an algorithm processing score; the algorithm processing score is configured to characterize a processing effect obtained by performing algorithm processing on the respective image;
in response to determining that the change trend is rising, maintaining a focusing direction unchanged;
in response to determining that the change trend is falling and a current change of the image quality scores is a first change, adjusting a focusing direction for a next focal length adjustment;
in response to determining that the change trend is falling and a change trend before and after a previous adjustment is rising, or, in response to determining that the change trend is falling and the current change of the image quality scores is not the first change, determining a focal length position before the current adjustment as the optimal focal length position.

2. The focusing method according to claim 1, wherein, a focal length range of the image acquisition device is pre-divided into at least two intervals;
performing the focal length adjustment of the image acquisition device according to the preset step length from the initial focal length position of the image acquisition device, until the optimal focal length position is determined, comprises:
selecting an initial focal length position for each of the intervals, and performing the focal length adjustment of the image acquisition device within each of the intervals according to the preset step length from the initial focal length position selected for each of the intervals, until a local optimal focal length position within each of the intervals is determined;
determining one of at least two determined local optimal focal length positions corresponding to a highest image quality score of the image quality scores of the images acquired, as the optimal focal length position.

3. The method according to claim 1, wherein, performing the focal length adjustment of the image acquisition device according to the preset step length from the initial focal length position of the image acquisition device, until the optimal focal length position is determined, comprises:
performing the focal length adjustment of the image acquisition device within a specified interval in a focal length range of the image acquisition device according to the preset step length from the initial focal length position of the image acquisition device, until the optimal focal length position is determined.

4. The method according to claim 1, wherein, performing the focal length adjustment of the image acquisition device according to the preset step length from the initial focal length position of the image acquisition device, comprises:
obtaining the initial focal length position of the image acquisition device and a focusing direction for a first focal length adjustment;
performing the focal length adjustment of the image acquisition device according to the focusing direction for the first focal length adjustment and the preset step length from the initial focal length position.

5. The method according to claim 4, wherein, obtaining the initial focal length position of the image acquisition device and the focusing direction for the first focal length adjustment, comprises:
obtaining a preset initial focal length position of the image acquisition device and a preset focusing direction for the first focal length adjustment;
or,
obtaining a historical optimal focal length position of the image acquisition device as the initial focal length position; comparing the initial focal length position with a middle position of a focal length range of the image acquisition device; in response to determining that the initial focal length position is less than the middle position, determining a focusing direction that increases an adjusted focal length position as the focusing direction for the first focal length adjustment; in response to determining that the initial focal length position is greater than the middle position, determining a focusing direction that decreases the adjusted focal length position as the focusing direction for the first focal length adjustment.

6. The method according to claim 1, wherein, the method further comprises:
in response to a focal length position of the image acquisition device being the initial focusing position, and in response to completion of each focal length adjustment, controlling the image acquisition device to acquire an image of the target object, and determining an image focusing score and an algorithm processing score of the image, respectively;
calculating a first product of the image focusing score and a preset image focusing weight, and a second product of the algorithm processing score and a preset algorithm processing weight, and calculating a sum of the first product and the second product as an image quality score of the image.

7. The method according to claim 6, wherein, before calculating the first product of the image focusing score and the preset image focusing weight, and the second product of the algorithm processing score and the preset algorithm processing weight, the method further comprises:
selecting, from preset mapping relationships between multiple weight combinations and application scenarios, a target weight combination matching a current application scenario of the image acquisition device; wherein each weight combination comprises: one image focusing weight and one algorithm processing weight;
calculating the first product of the image focusing score and the preset image focusing weight, and the second product of the algorithm processing score and the preset algorithm processing weight, comprises:
calculating a first product of the image focusing score and the image focusing weight comprised in the target weight combination, and a second product of the algorithm processing score and the algorithm processing weight comprised in the target weight combination.

8. The method according to claim 7, wherein, the mapping relationships comprise:
a mapping relationship between an application scenario for performing object processing on the target object and a first weight combination; wherein the image focusing weight comprised in the first weight combination is less than the algorithm processing weight; and,
a mapping relationship between an image acquisition scenario where the target object does not exist and a second weight combination; wherein the algorithm processing weight comprised in the second weight combination is 0.

9. The method according to claim 6, wherein, determining the image focusing score and the algorithm processing score of the image, comprises:
determining a region of interest in the image for algorithm processing regarding the target object, and determining an image focusing score and an algorithm processing score of the region of interest.

10. The method according to claim 9, wherein, determining the region of interest in the image for algorithm processing regarding the target object, comprises:
performing object recognition on the image, and determining an image region where a recognized detection bounding box comprising the target object is located as the region of interest for algorithm processing regarding the target object.

11. The method according to claim 1, wherein, in response to performing the focal length position adjustment of the image acquisition device, determining the change trend of the image quality scores of the images of the target object acquired by the image acquisition device before and after the adjustment, comprises:
in response to performing the focal length position adjustment of the image acquisition device, calculating a numerical relationship and a difference between the image quality scores of the images of the target object acquired by the image acquisition device before and after the current adjustment;
in response to determining that the difference is greater than a preset value, and the numerical relationship indicates that the image quality score before the current adjustment is less than the image quality score after the current adjustment, determining that the change trend of the image quality scores before and after the current adjustment is rising;
in response to determining that the difference is greater than the preset value, and the numerical relationship indicates that the image quality score before the current adjustment is greater than the image quality score after the current adjustment, determining that the change trend of the image quality scores before and after the current adjustment is falling;
in response to determining that the difference is not greater than the preset value, determining that the change trend of the image quality scores before and after the current adjustment is unchanged;
the method further comprises: in response to determining that the change trend is unchanged, maintaining the focusing direction unchanged.

12. The method according to claim 11, wherein, the method further comprises:
determining an adjustment ratio based on the image acquisition device, and calculating the preset value based on a preset reference value and the adjustment ratio.

13. The method according to claim 1, wherein, in the case where the change trend is falling and the current change of the image quality scores is the first change, adjusting the focusing direction for the next focal length adjustment, comprises:
in response to determining that the change trend is falling, a specified number of consecutive times at which the change trend is falling is reached, and a situation where the change trends have been the same for the specified number of consecutive times does not occur before the current adjustment, adjusting the focusing direction for the next focal length adjustment;
in the case where the change trend is falling and the change trend before and after the previous adjustment is rising, determining the focal length position before the current adjustment as the optimal focal length position, comprises:
in response to determining that the change trend is falling, the specified number of consecutive times at which the change trend is falling is reached, and a situation where the change trends have been the same for the specified number of consecutive times occurs before the current adjustment, determining a focal length position before a first adjustment of adjustments at the specified number of consecutive times comprising the current adjustment, as the optimal focal length position.

14. The method according to claim 1, wherein, the method further comprises:
judging whether the optimal focal length position satisfies a preset focusing condition;
in response to determining that the optimal focal length position satisfies the preset focusing condition, focusing the image acquisition device according to the optimal focusing position;
in response to determining that the optimal focal length position does not satisfy the preset focusing condition, traversing each focal length position within a focal length range of the image acquisition device, and in response to traversing each focal length position, determining the image quality scores of the images acquired by the image acquisition device;
updating the optimal focal length position to a focal length position of the image acquisition device in response to determining that an image with a highest image quality score is acquired.

15. The method according to any one of claims 1-14, wherein, the target object is a graphic recognition code, the algorithm processing score comprises: a code reading score, and the processing effect comprises but is not limited to at least one of recognition success rate, recognition accuracy rate, and recognition speed.

16. A focusing apparatus, wherein, the apparatus comprises:
a focusing module, configured to perform a focal length adjustment of an image acquisition device according to a preset step length from an initial focal length position of the image acquisition device, until an optimal focal length position is determined; wherein, the focusing module comprises:
a change trend determination sub-module, configured to, in response to performing the focal length position adjustment of the image acquisition device, determine a change trend of image quality scores of images of a target object acquired by the image acquisition device before and after the adjustment; wherein an image quality score is determined based on an image focusing score and/or an algorithm processing score; the algorithm processing score is configured to characterize a processing effect obtained by performing algorithm processing on the respective image;
a focusing direction maintaining sub-module, configured to, in response to determining that the change trend is rising, maintain a focusing direction unchanged;
a focusing direction adjustment sub-module, configured to, in response to determining that the change trend is falling and a current change of the image quality scores is a first change, adjust a focusing direction for a next focal length adjustment;
an optimal focusing position determination sub-module, configured to, in response to determining that the change trend is falling and a change trend before and after a previous adjustment is rising, or, in response to determining that the change trend is falling and the current change of the image quality scores is not the first change, determine a focal length position before the current adjustment as the optimal focal length position.

17. The focusing apparatus according to claim 16, wherein, a focal length range of the image acquisition device is pre-divided into at least two intervals; the focusing module is specifically configured to:
select an initial focal length position for each of the intervals, and perform the focal length adjustment of the image acquisition device within each of the intervals according to the preset step length from the initial focal length position selected for each of the intervals, until a local optimal focal length position within each of the intervals is determined;
determine one of at least two determined local optimal focal length positions corresponding to a highest image quality score of the image quality scores of the images acquired, as the optimal focal length position.

18. The apparatus according to claim 16, wherein, the focusing module is specifically configured to:
perform the focal length adjustment of the image acquisition device within a specified interval in a focal length range of the image acquisition device according to the preset step length from the initial focal length position of the image acquisition device, until the optimal focal length position is determined.

19. The apparatus according to claim 16, wherein, the focusing module further comprises:
an information obtaining sub-module, configured to obtain the initial focal length position of the image acquisition device and a focusing direction for a first focal length adjustment;
the focusing module is specifically configured to perform the focal length adjustment of the image acquisition device according to the focusing direction for the first focal length adjustment and the preset step length from the initial focal length position.

20. The apparatus according to claim 19, wherein, the information obtaining sub-module is specifically configured to:
obtain a preset initial focal length position of the image acquisition device and a preset focusing direction for the first focal length adjustment; or,
obtain a historical optimal focal length position of the image acquisition device as the initial focal length position; compare the initial focal length position with a middle position of a focal length range of the image acquisition device; in response to determining that the initial focal length position is less than the middle position, determine a focusing direction that increases an adjusted focal length position as the focusing direction for the first focal length adjustment; in response to determining that the initial focal length position is greater than the middle position, determine a focusing direction that decreases the adjusted focal length position as the focusing direction for the first focal length adjustment.

21. The apparatus according to claim 16, wherein, the apparatus further comprises:
a score determination module, configured to, in response to a focal length position of the image acquisition device being the initial focusing position, and in response to completion of each focal length adjustment, control the image acquisition device to acquire an image of the target object, and determine an image focusing score and an algorithm processing score of the image, respectively;
a score calculation module, configured to calculate a first product of the image focusing score and a preset image focusing weight, and a second product of the algorithm processing score and a preset algorithm processing weight, and calculate a sum of the first product and the second product as the image quality score of the image.

22. The apparatus according to claim 15, wherein, the apparatus further comprises:
a weight selection module, configured to, before calculating the first product of the image focusing score and the preset image focusing weight, and the second product of the algorithm processing score and the preset algorithm processing weight, select, from preset mapping relationships between multiple weight combinations and application scenarios, a target weight combination matching a current application scenario of the image acquisition device; wherein each weight combination comprises: one image focusing weight and one algorithm processing weight;
the score calculation module is specifically configured to calculate a first product of the image focusing score and the image focusing weight comprised in the target weight combination, and a second product of the algorithm processing score and the algorithm processing weight comprised in the target weight combination.

23. The apparatus according to claim 22, wherein, the mapping relationships comprise:
a mapping relationship between an application scenario for performing object processing on the target object and a first weight combination; wherein the image focusing weight comprised in the first weight combination is less than the algorithm processing weight; and,
a mapping relationship between an image acquisition scenario where the target object does not exist and a second weight combination; wherein the algorithm processing weight comprised in the second weight combination is 0.

24. The apparatus according to claim 21, wherein, the score determination module comprises:
a region determination sub-module, configured to determine a region of interest in the image for algorithm processing regarding the target object;
a score determination sub-module, configured to determine an image focusing score and an algorithm processing score of the region of interest.

25. The apparatus according to claim 24, wherein, the region determination sub-module is specifically configured to:
perform object recognition on the image, and determine an image region where a recognized detection bounding box comprising the target object is located as the region of interest for algorithm processing regarding the target object.

26. The apparatus according to claim 16, wherein, the change trend determination sub-module is specifically configured to:
in response to performing the focal length position adjustment of the image acquisition device, calculate a numerical relationship and a difference between the image quality scores of the images of the target object acquired by the image acquisition device before and after the current adjustment;
in response to determining that the difference is greater than a preset value, and the numerical relationship indicates that the image quality score before the current adjustment is less than the image quality score after the current adjustment, determine that the change trend of the image quality scores before and after the current adjustment is rising;
in response to determining that the difference is greater than the preset value, and the numerical relationship indicates that the image quality score before the current adjustment is greater than the image quality score after the current adjustment, determine that the change trend of the image quality scores before and after the current adjustment is falling;
in response to determining that the difference is not greater than the preset value, determine that the change trend of the image quality scores before and after the current adjustment is unchanged;
the focusing direction maintaining sub-module is further configured to, in response to determining that the change trend is unchanged, maintain the focusing direction unchanged.

27. The apparatus according to claim 26, wherein, the apparatus further comprises:
a numerical adjustment module, configured to determine an adjustment ratio based on the image acquisition device, and calculate the preset value based on a preset reference value and the adjustment ratio.

28. The apparatus according to claim 16, wherein,
the focusing direction adjustment sub-module is specifically configured to, in response to determining that the change trend is falling, a specified number of consecutive times at which the change trend is falling is reached, and a situation where the change trends have been the same for the specified number of consecutive times does not occur before the current adjustment, adjust the focusing direction for the next focal length adjustment;
the optimal focusing position determination sub-module is specifically configured to, in response to determining that the change trend is falling, the specified number of consecutive times at which the change trend is falling is reached, and a situation where the change trends have been the same for the specified number of consecutive times occurs before the current adjustment, determine a focal length position before a first adjustment of adjustments at the specified number of consecutive times comprising the current adjustment, as the optimal focal length position.

29. The apparatus according to claim 16, wherein, the apparatus further comprises:
a focusing judgment module, configured to judge whether the optimal focal length position satisfies a preset focusing condition; in response to determining that the optimal focal length position satisfies the preset focusing condition, trigger a device focusing module, in response to determining that the optimal focal length position does not satisfy the preset focusing condition, trigger a position traversal module;
the device focusing module is configured to focus the image acquisition device according to the optimal focusing position;
the position traversal module is configured to traverse each focal length position within a focal length range of the image acquisition device, and in response to traversing each focal length position, determine the image quality scores of the images acquired by the image acquisition device;
a position update module, configured to update the optimal focal length position to a focal length position of the image acquisition device in response to determining that an image with a highest image quality score is acquired.

30. The apparatus according to any one of claims 16-29, wherein, the target object is a graphic recognition code, the algorithm processing score comprises: a code reading score, and the processing effect comprises but is not limited to at least one of recognition success rate, recognition accuracy rate, and recognition speed.

31. An electronic device, wherein, the electronic device comprises:
a memory, configured to store a computer program;
a processor, configured to execute the computer program stored on the memory to implement the method according to any one of claims 1-15.

32. A computer-readable storage medium, wherein, the computer-readable storage medium stores a computer program, and the computer program, when executed by a processor, implements the method according to any one of claims 1-15.

33. A computer program product comprising an instruction, wherein, the computer program product, when running on a computer, causes the computer to execute the method according to any one of claims 1-15.
